# EUROPÄISCHE PATENTSCHRIFT

(11) **EP 3 571 681 B1**
(45) Veröffentlichungstag und Bekanntmachung des Hinweises auf die Patenterteilung: **18.11.2020**
(21) Anmeldenummer: 17712430.2
(22) Anmeldetag: 13.03.2017
(51) Int. Cl.: G08B 15/00, G08B 21/02, G08B 3/10

(54) **TRAGBARE SIRENE UND NOTRUFGERÄT SOWIE DEREN KOMBINATION**
PORTABLE SIREN AND EMERGENCY CALL DEVICE, AND COMBINATION THEREOF
SIRÈNE PORTABLE ET APPAREIL D'APPEL D'URGENCE AINSI QUE LEUR COMBINAISON

(30) Priorität: 20.01.2017 DE 202017000518 U
(43) Veröffentlichungstag der Anmeldung: 27.11.2019
(73) Patentinhaber: King, Rudolf, 86972 Altenstadt (DE)
(72) Erfinder: King, Rudolf, 86972 Altenstadt (DE)
(74) Vertreter: Becker & Kurig Partnerschaft Patentanwälte PartmbB
(86) Internationale Anmeldenummer: PCT/EP2017/055809
(87) Internationale Veröffentlichungsnummer: WO 2018/133955

(56) Entgegenhaltungen:
- WO-A1-2010/084328
- DE-A1- 3 008 846
- US-A- 5 489 045
- US-A1- 2004 066 299
- US-A1- 2016 192 164

## Beschreibung

Die vorliegende Erfindung betrifft eine tragbare Sirene oder auch einen Taschenalarm, mit einem Lautsprecher, der in der Lage ist, ein Tonsignal mit bevorzugt hohem Schalldruck abzugeben, sowie einem inneren Schaltelement zum Ausschalten und bevorzugt zum Ein- und Ausschalten des Tonsignals, sowie einem äußeren Schalter oder einer äußeren Schalterattrappe.

Es sind bereits tragbare Sirenen und Notrufgeräte bekannt, die auch als Taschenalarme oder "Schrillalarme" bekannt sind, ferner sind ebenfalls Notrufgeräte bekannt. Ein Taschenalarm soll einen Angreifer oder einen Taschendieb von einer weiteren Ausführung seiner Tat abhalten, indem ein lauter Ton abgegeben wird, durch den Aufmerksamkeit auf einen Diebstahl oder einen Angriff gelenkt wird. Diese zusätzliche Aufmerksamkeit soll dabei den Angreifer bzw. den Dieb dazu veranlassen, den Angriff abzubrechen bzw. den entwendeten Gegenstand fallenzulassen.

Aus der Us-Patentanmeldung US 5489045 A ist eine transportable, wiederverwendbare anti-Einbrecher- Fallenvorrichtung" bekannt, die hinter einer Tür oder einem Fenster aufgestellt wird, und einen Einbrecher erschrecken und vertreiben soll, wobei dass das Gerät mit einer Wachs- oder Teer- Oberfläche versehen ist, die besonders gut geeignet ist Fingerabdrücke aufzuzeichnen.

Die US-Patentanmeldung US 2016192164 A1 offenbart eine persönliche Schutzvorrichtung, die mit einem Mobiltelephon kombiniert ist, wobei eine Aktivierung des einen Geräts jeweils eine Aktivierung des anderen Geräts bewirkt. Die Geräte werden dabei durch einen Schalter oder einen Sprachbefehl aktiviert, wobei auf eine Aktivierung hin ein Hilferuf mit dem momentanen Aufenthaltsort an einen Notrufkontakt gesendet werden.

Aus der internationalen Patentanmeldung WO 2010084328 A1 ist bereits ein eine Kombination aus einem Mobiltelephon und einer Alarmvorrichtung bekannt bei der die in einem im nicht-Alarmzustand miteinander verbunden. Durch eine Trennung von Telephon und der Alarmvorrichtung wird die Alarmvorrichtung automatisch ausgelöst, und kann nicht abgeschaltet werden, solange die Alarmvorrichtung nicht wieder mit dem Mobiltelephon verbunden wird.

Mobile Notfallsicherungsgeräte sind seit etwa 2009 auf dem Markt erhältlich und durch das Aufkommen von Smartphones, also Handys mit Rechenleistung und GPS Positionierung weitläufig verfügbar. Hierbei wird die Position des Nutzers konstant oder nach Alarmauslösung ermittelt und eine Nachricht an eine vorbestimmte Personen, Firma, Organisation oder Personengruppe versendet, vor allem per mobilem Internet, WLAN und/oder Textnachricht (SMS).
Allen Geräten gemeinsam ist, dass die manuelle Betätigung zur Alarmauslösung regelmäßig am Gerät selbst erfolgen kann.

Notrufgeräte, die bei Aktivierung einen Standort und ein Notfallsituationssignal an eine Leitstelle schicken, um eine Polizei oder einen anderen Hilfsdienst zu verständigen und zu einer Notfallstelle zu beordern, sind ebenfalls bekannt.

Gemäß einem ersten Aspekt der vorliegenden Erfindung wird eine tragbare Sirene mit den Merkmalen des Anspruchs 1 bereitgestellt, wobei bevorzugte Ausführungsformen in den abhängigen Ansprüchen offenbart sind. Die tragbare Sirene umfasst, die einen Lautsprecher, ein inneres und/oder äußeres Schaltelement und einen äußeren Schalter oder eine äußere Schalterattrappe. Die tragbare Sirene wird zusätzlich mit einem Gehäuse einer Stromversorgung, einem Tongenerator und eventuell weiteren Schaltungen versehen sein, die der Fachmann als gegeben voraussetzt, ohne dass hierfür explizit eine Reihe von selbstverständlichen Komponenten aufgezählt werden muss. Der Lautsprecher ist vorgesehen, um ein Tonsignal bevorzugt mit hohem Schalldruck abzugeben. Damit dient die Sirene dazu, akustisch Aufmerksamkeit auf die Sirene und ein Geschehen im Bereich der Sirene zu lenken. Die Sirene umfasst weiter ein inneres und/oder äußeres Schaltelement zum Ausschalten und bevorzugt auch zum Ein- und Ausschalten für das Tonsignal. Das innere und/oder äußere Schaltelement kann zum Ausschalten nicht ohne weiteres bzw. ohne Werkzeug betätigt werden.

Typischerweise ist das innere und/oder äußere Schaltelements dadurch zu betätigen, dass das Gehäuse an einer Kordel, bevorzugt mit einem Steckverschluss befestigt ist, welche wiederum an einer Tasche, Geldbörse, Schlüsselbund oder Kleidungsstück des Nutzer befestigt ist, und welches durch Abziehen der Kordel vom Gehäuse die Sirene aktiviert. Durch Rückbefestigung der Kordel bzw. des Steckers kann die Sirene mittels des inneren Schaltelements abgeschaltet werden. Weiterhin ist an der tragbaren Sirene ein äußerer Schalter und/oder eine äußere Schalterattrappe vorhanden. Das innere und/oder das äußere Schaltelement oder auch der äußere Schalter können dazu dienen, das Tonsignal einzuschalten bzw. die Sirene auszulösen. Der äußere Schalter oder die äußere Schalterattrappe bzw. die äußeren Schalterattrappen dient und dienen dazu, die Aufmerksamkeit einer Person, die durch die Sirene gestört wird, vom Opfer weg und auf die Sirene zu lenken, und die Person dazu zu veranlassen, den äußeren Schalter bzw. die äußere Schalterattrappe in einem Versuch zu betätigen, die Sirene auszuschalten. Durch die Betätigung des äußeren Schalters bzw. der äußeren Schalterattrappe wird die Person von ihrem geplanten Handeln ablassen und sich mit der tragbaren Sirene beschäftigen, was einer Person, die diese Sirene bzw. das Tonsignal ausgelöst hat, eventuell genug Zeit verschafft zu flüchten. Der äußere Schalter und/oder die äußere Schalterattrappe können dabei auch als Taste bzw. Tastenattrappe ausgeführt sein. Im weiteren kann das Tonsignal einen Pfeifton, eine Pfeiftonsequenz oder auch Schreie / Rufe nach Hilfe oder der Polizei umfassen. In einer einfachen Ausführung ist das Tonsignal ein einfacher Ton, der mit einer Lautstärke abgegeben wird, die innerhalb von 2 Metern oberhalb einer Schmerzgrenze liegt, d.h. Schalldruckpegelwerte zwischen mindestens 120dB und mindestens 140dB bzw. Schalldrücke zwischen mindestens 20Pa und mindestens 200Pa aufweisen (je nach Tonhöhe, und gewünschter Schmerzintensität). Es kann ebenfalls vorgesehen sein, dass zwei Töne verwendet werden, um eine Schwebung zu erzeugen, die im Allgemeinen als ein sehr unangenehmes Tonsignal empfunden wird. Es ist zu beachten, dass auch andere als besonders unangenehm empfundene Töne als Tonsignal verwendet werden können. Eine Schwebung lässt sich sehr einfach durch zwei Lautsprecher erzeugen, die jeweilige Töne mit leicht unterschiedlicher Frequenz verwenden.

Auch bei lediglich einer funktionslosen äußeren Schalterattrappe, die den Eindruck eines Aus-Schalters für das Tonsignal erweckt, kann eine Ablenkung eines Angreifers lange genug anhalten, um einer bedrängten Person eine Flucht zu ermöglichen.

### Funktionsweise

Durch die Kombination von einem äußeren Schalter, der die Sirene nicht abschaltet und/oder einer äußeren Schalterattrappe mit der Alarmauslösung des mPERS, entsteht eine neue Funktionsweise: Egal wie die Tat weitergeht, also sogar dann, wenn das Opfer anschließend vom Tatort verbracht wird, wird typischerweise eine Sirene an dem Ort gefunden werden, an dem der Alarm ausgelöst wurde. Es wird so eine Spurensicherung ermöglicht, die durch Fingerabdruck und DNA auf den Täter hinweisen und ihn mit dem Ort des Geschehens in Verbindung bringen kann. Dies kann zur Festnahme führen und vor allem auch vor Gericht die zwei wichtigsten Verteidigungsstrategien untergraben, und zwar, dass es sich um eine Verwechslung oder um einvernehmliche Handlungen handele und so zur Verurteilung des Täters nach Indizien statt nach Aussage gegen Aussage führen.

### Weitere Ausführungsformen

Bei einer weiteren Ausführungsform der tragbaren Sirene ermöglicht der äußere Schalter lediglich ein Einschalten, nicht jedoch ein Ausschalten des Tonsignals. Damit kann die tragbare Sirene bzw. das Tonsignal ebenfalls durch den äußeren Schalter aktiviert werden. Die Taste kann als Ein- bzw. Aus- Schalter gekennzeichnet sein, um den Eindruck zu erwecken es bestünde eine einfache Möglichkeit, das Tonsignal schnell auszuschalten. Bei dieser Ausführung kann eventuell auf ein inneres Schaltelement zum Einschalten, nicht jedoch auf ein inneres Schaltelement zum Ausschalten verzichtet werden.

Bei einer weiteren Ausführungsform der tragbaren Sirene weist der äußere Schalter und/oder die äußere Schalterattrappe bei Betätigung einen Tastenweg und/oder einen Tastenanschlag und/oder einen Tastenton als Rückmeldung der Betätigung auf. Damit wird dem Benutzer eine haptische oder akustische Rückmeldung über eine Betätigung des äußeren Schalters und/oder der äußeren Schalterattrappe bereitgestellt. Bei einer bevorzugten Ausführung des äußeren Schalters und/oder der äußeren Schalterattrappe, erzeugt die akustische oder haptische Rückmeldung einen Eindruck eines verklemmten oder beschädigten äußeren Schalters, sodass ein Benutzer dazu verleitet wird, mit größerer Kraft auf den äußeren Schalter und/oder die äußere Schalterattrappe zu drücken. Bei einer weiteren Ausführung erfordert die Betätigung des äußeren Schalters bzw. der äußeren Schalterattrappe nach einem geringen Schalt- bzw. Tastweg eine erhöhte Betätigungskraft. Die erhöhte Betätigungskraft kann in den folgenden Ausführungen besonders effektiv dazu genutzt werden, an der tragbaren Sirene Täterspuren besser zu sammeln.

Eine weitere Ausführungsform der vorliegenden Erfindung betrifft eine tragbare Sirene, deren äußerer Schalter und/oder deren äußere Schalterattrappe mit einer Vorrichtung versehen ist, um einen Finger- bzw. Daumenabdruck eines Fingers bzw. Daumens aufzuzeichnen, der den äußern Schalter und/oder die äußere Schalterattrappe betätigt. Der Fingerabdrucksensor kann als elektronischer Fingerabdrucksensor ausgeführt sein, der ein Linienmuster einer Finger- oder Daumenkuppe elektronisch aufzeichnet. Der aufgenommene Fingerabdruck kann in der tragbaren Sirene gespeichert und später ausgelesen werden. Der aufgenommene Fingerabdruck kann ebenfalls über eine Funkschnittstelle oder eine Mobilfunkschnittstelle an eine Leitstelle oder eine Notrufzentrale übermittelt werden. Es ist ebenfalls möglich, den Fingerabdruck an ein sich in der Nähe befindliches Notrufgerät über eine jeweilige vorhandene kurzreichweitige Funkübertragungs/-schnittstelle zu übermitteln, wobei das Notrufgerät den elektronisch vorliegenden Fingerabdruck speichern und/oder über eine (Mobil-) Funkschnittstelle an eine entsprechende Leitstelle übermitteln kann. Eine elektronische Aufnahme mit einer oder ohne eine Übermittlung ermöglicht es zudem, dass mehrere Fingerabdrücke aufgenommen werden können, falls beispielswiese mehrere Personen versuchen die tragbare Sirene durch einen Druck auf den äußeren Schalter oder die äußere Schalterattrappe auszuschalten. Die elektronische Aufnahme bzw. Aufzeichnung von Fingerabdrücken weist zudem den Vorteil auf, dass mehrere Abbilder desselben Fingerabdrucks aufgezeichnet werden können, sodass beispielsweise bei mehreren Aufnahmen die beste oder eine Überlagerung mehrerer Aufnahmen einen brauchbaren Fingerabdruck ergeben können.

Es kann ebenfalls vorgesehen sein, dass eine Oberfläche des äußere Schalters oder der äußere Schalterattrappe dazu eingerichtet ist bei deren Betätigung einen Fingerabdruck aufzuzeichnen. Oberfläche des äußere Schalters oder der äußere Schalterattrappe kann dabei eine plastisch verformbare Komponente umfassen, die direkt ein Höhenprofil der, den äußeren Schalter bzw. die äußere Schalterattrappe betätigenden Fingerkuppe aufnimmt bzw. abdrückt. Es kann ebenfalls vorgesehen sein, die Oberfläche des äußeren Schalters oder der äußere Schalterattrappe mit einer chemischen Komponente zu versehen, die sich für eine Sicherung eines Fingerabdrucks besonders eignet. Es kann vorgesehen sein, beispielsweise eine klebende Oberfläche zu verwenden, an der Zellen einer obersten Hautschicht einer Fingerkuppe an dieser Oberfläche fixiert und so ein Abbild eines Fingerabdrucks festhält.

Es ist ebenfalls vorgesehen, eine Folie auf einer Oberfläche des äußeren Schalters anzuordnen, die bei einem späteren Schritt in ein Gehäuse der tragbaren Sirene eingerollt und so sichergestellt wird. Dazu kann eine Folie auf der Oberfläche nach einer Betätigung in das Gehäuse eingezogen werden. Die Folie kann als Doppelfolie ausgelegt sein, die in zwei Schlaufen übereinander angeordnet ist. Diese Anordnung ist insgesamt vierlagig, und kann bei geeigneter Auslegung direkt beim Betätigen unter der Fingerkuppe in das Gerät eingezogen werden, ohne dass der Fingerabdruck beschädigt wird. Beim Einziehen kann der Fingerabdruck auch gleich durch die untere Folie gesichert werden.

Bei einer zusätzlichen Ausführungsform der vorliegenden Erfindung weist der äußere Schalter und/oder die äußere Schalterattrappe Verletzungsmittel auf, die dazu eingerichtet sind, eine Gewebeprobe von der Fingerkuppe zu nehmen und/oder bei Betätigung die Haut eines Benutzers zu verletzen. Das Verletzungsmittel soll dabei so ausgelegt sein, dass zumindest Hautzellen von der Hornhaut einer einen äußeren Schalter und/oder die äußere Schalterattrappe betätigenden Fingerkuppe abgetrennt und gesichert werden. Das Verletzungsmittel soll in diesem Zusammenhang eine Sicherstellung einer DNS-Probe ermöglichen, zumindest einen Teil einer Hornhaut abtragen. In weiteren Ausführungen soll ebenfalls eine Blut- und/oder Gewebeprobe durch das Verletzungsmittel aus einer Fingerkuppe entnommen werden. Das Verletzungsmittel kann dabei in einer einfachen Ausführung einen scharfkantigen Rand des äußeren Schalters und/oder der äußeren Schalterattrappe umfassen. Bei einer weiteren einfachen Ausführung kann unter der Taste eine Nadel angeordnet sein, die bei Betätigung des äußeren Schalters und/oder der äußeren Schalterattrappe über eine Oberfläche des betätigten äußeren Schalters vortritt.

Bei einer Ausführungsform der tragbaren Sirene umfasst das Verletzungsmittel mindestens einen scharfen oder gezackten Rand oder scharfe oder gezackte Strukturen. Diese Strukturen können relativ klein sein, um lediglich Hautzellen aus der Hornhaut zu entnehmen, können jedoch ebenfalls groß genug sein, um eine Blutung zu erzeugen. Weiterhin können Kapillaren, Rillen oder ein Vlies als Auffangmittel für austretendes Blut vorgesehen sein, um später eine Blut und/oder DNS-basierende Identifizierung einer Person zu ermöglichen, die versucht hat den äußeren Schalter bzw. die äußere Schalterattrappe zu betätigen oder die versucht hat, den Fingerabdruck abzuwischen und sich dabei am Rand verletzt.

Bei einer beispielhaften Ausführung der tragbaren Sirene umfasst das Verletzungsmittel mindestens eine Nadel, Hohlnadel und/oder mindestens eine Lanzette oder Klinge, die bevorzugt mit Widerhaken versehen ist. Eine einfache Nadel kann dazu dienen eine blutende Wunde zu erzeugen, wobei austretendes Blut direkt an einer Oberfläche der tragbaren Sirene aufgefangen werden kann. Eine Hohlnadel ermöglicht es direkt eine Gewebeprobe und Blut zu entnehmen, und eine kleine, stärker und länger blutende Wunde zu erzeugen. Bei Hohlnadeln können Widerhaken insbesondere eine Gewebeprobe sicher innerhalb der Hohlnadel einfangen. Eine Lanzette kann eine längere und tiefere Wunde erzeugen. Eine Klinge ermöglichte es eine beliebig geformte Verletzung zu erzeugen.

Bei einer etwas weiter entwickelten Ausführung der tragbaren Sirene, ist das Verletzungsmittel mit Widerhaken versehen von der tragbaren Sirene lösbar, wodurch ein Teil des Verletzungsmittels oder das gesamte Verletzungsmittel bei Betätigung in der Wunde verbleiben kann. Dies kann beispielsweise durch eine Harpune erreicht werden, die in eine Hohlnadel eingesetzt ist. Durchdringt die Hohlnadel die Haut kann die Harpune durch die Widerhaken in dem Gewebe fixiert werden, und beim Abheben der Fingerkuppe aus der Hohlnadel herausgezogen werden. Die Harpune kann einen photogeätzten Blechstreifen umfassen, in den eine Nachricht an eine Person eingeätzt ist, die die Harpune in einem Krankenhaus entfernen soll. Die Nachricht kann beispielsweise "Verbrecher" oder "Crime" oder dergleichen lauten, was sich ohne weiteres auf einer wenige Millimeter großen Harpune unterbringen lässt. Es ist ebenfalls möglich einen Mikrostent in die Wunde einzusetzen, um die Wunde länger offenzuhalten.

Bei einer zusätzlichen Ausführung der tragbaren Sirene ist das Verletzungsmittel weiter mit einer Injektionsvorrichtung versehen, um eine Flüssigkeit bevorzugt einen Reizstoff, ein Medikament und/oder ein Pigment oder eine Pigmentlösung in die Verletzung einzubringen. Dieses ermöglicht es einfach die Fingerkuppe der Person die den äußeren Schalter oder die äußere Schalterattrappe betätigt durch eine Injektion zu kennzeichnen, Es ist beispielsweise möglich einen oder mehrere Punkte als Kennzeichnung zu verwenden. Es kann auch vorgesehen sein, ein Pigment zu verwenden, das nur unter UV-Licht sichtbar bzw. fluoreszierend ist, um der verletzten Person nicht zu verraten, dass sie gekennzeichnet wurde, wodurch die Person nicht zu eine Entfernung der Markierung veranlasst wird. Es ist ebenfalls möglich ein blutungsförderndes Mittel zu injizieren um ein schnelles Verschließen der Wunde zu unterbinden und eine Blutung länger aufrecht zu erhalten. Da die Verletzung eher klein wie ein oder wenige Nadelstiche ist, kann auch eine längere Blutungszeit nicht zu einem lebensbedrohlichen Blutverlust führen. Da angenommen wird, dass die Person, die den äußere Schalter oder die äußere Schalterattrappe der tragbaren Sirene betätigt dies in Zusammenhang mit einem Verbrechen oder einem versuchten Verbrechen tut, kann eine länger blutende Wunde eine Blutspur erzeugen, die direkt oder indirekt zu dem Täter führt. Es kann ebenfalls vorgesehen sein einen Reizstoff wie zum Beispiel Piperin, Capsaicin, Uranin, Eosin Y, Rhodamine oder Salz in die Wunde einzubringen, um einen Wundschmerz zu erhöhen. Die Reizstoffe sollten dabei lediglich in einer im Wesentlichen unbedenklichen Menge in die Wunde eingebracht werden, sodass ein Versterben oder Langzeitschäden bei der Person praktisch ausgeschlossen werden können. Ziel dieser Maßnahmen ist es einen Angreifer abzulenken, und soweit zu beschäftigen, dass er einen geplanten Angriff nicht weiter fortsetzen kann oder zumindest will. Ein weiteres Ziel besteht darin, den Angreifer zu kennzeichnen, um ihn besser identifizieren zu können. Weiterhin besteht ein weiteres Ziel darin den Angreifer zu identifizieren, was durch Gewebe- und Blutproben geschehen kann, die von einem Labor ausgewertet und mit einer kriminologischen Datenbank abgeglichen oder bei Ersttätern zumindest dort eingetragen werden kann.

Bei einem Angriff wird eine angegriffene Person die tragbare Sirene bzw. das Tonsignal auslösen bzw. aktivieren und fallenlassen. Eine angreifende Person wird durch das Tonsignal einerseits durch die Laustärkte als auch durch die dadurch erzeugte Aufmerksamkeit gestört, und wird versuchen, die tragbare Sirene wieder auszuschalten. Ein als sichtbarer Aus-Schalter gekennzeichneter äußerer Schalter oder äußere Schalterattrappe soll den Angreifer dazu verleiten, diesen bzw. diese in einem Versuch zu drücken, das Tonsignal auszuschalten. Bei einem Betätigen des äußeren Schalters bzw. der äußeren Schalterattrappe um das Tonsignal und damit die Aufmerksamkeit auszuschalten, wird der Angreifer abgelenkt, verliert Zeit und Aufmerksamkeit bezüglich der angegriffenen Person, wird als Angreifer gekennzeichnet, durch die Proben-/Fingerabdruckentnahme identifizierbar und durch eine Verletzung, Schmerzen und einen kleinen Blutverlust weiter in seiner Angriffsfähigkeit herabgesetzt.

Eine weitere Ausführung der tragbaren Sirene umfasst ein Verletzungsmittel, das mit einer automatischen Stech- und/oder Rückzugsfunktion versehen ist, die bevorzugt als Einmal-Stech- und/oder Rückzugsfunktion ausgeführt ist. Die Stech- und/oder Rückzugsfunktion kann eine Lanzette, eine Nadel oder eine Hohlnadel oder eine Probenentnahme-Hohlnadel sein. Die Stech- und/oder Rückzugsfunktion kann dabei ähnlich ausgeführt sein, wie bei Sicherheitslanzetten, wie sie aus dem Medizinbereich bekannt sind. Hier soll die Stech- und/oder Rückzugsfunktion lediglich sicherstellen dass nur von der ersten Person, die den äußeren Schalter bzw. die äußere Schalterattrappe betätigt eine Probe genommen wird bzw. nur diese Person gestochen wird. Die tragbare Sirene sollte bei einem idealen Szenario an einem Tatort verbleiben, und von einer weiteren Person bevorzugt von Sicherheitskräften wie der Polizei aufgefunden und ausgewertet werden. Wenn ein Passant der später an dem Tatort vorbeikommt die Sirene aufhebt und das Tonsignal ausschalten möchte, sollte er nicht verletzt werden, da dies die Spuren eines ursprünglichen Angreifers zerstören könnte. Weiterhin kann durch die Stech- und/oder Rückzugsfunktion verhindert werden, dass weitere Personen durch das oder die Verletzungsmittel zu Schaden kommen.

Bei einer anderen Ausführungsform der tragbaren Sirene ist das Verletzungsmittel eingerichtet eine Verletzung in Form eines Symbols zu erzeugen. Dies kann beispielsweise in Form des Paragraphen-Zeichens "§" geschehen, damit eine Person, die zur Behandlung der Wunde hinzugezogen wird, sich auf jeden Fall an die Form der Wunde erinnern wird und dies entweder sofort den Behörden meldet und/oder dies in einem Gerichtsverfahren aus der Erinnerung wiedergeben kann. Das Paragraphenzeichen dient dazu die behandelnde Person auf eine gesetzesrelevante Wunde hinzuweisen. Es ist ebenfalls möglich die Klingen am Rand des äußeren Schalters anzubringen, um so eine rechteckige oder quadratische Wunde zu erzeugen. Andere Formen und Symbole sind ebenfalls möglich. Es kann vorgesehen sein, durch die Verletzung auch den Bereich des Fingers von dem ein Fingerabdruck genommen wird zu verletzen, die Verletzung bei einer späteren Abnahme von Fingerabdrücken erkennbar zu machen. Es kann vorgesehen sein, das Verletzungsmittel so auszuführen oder mit Medikamenten zu behandeln, dass es eine deutliche Narbe hinterlässt.

Eine weitere beispielhafte Ausführung der tragbaren Sirene umfasst weiter mindestens eine Spritzvorrichtung. Die mindestens eine Spritzvorrichtung ist vorgesehen, um ein oder mehrere Flüssigkeiten oder Fluide zu verspritzen. Die Spritzvorrichtung ist mit dem äußeren Schalter und/oder der äußeren Schalterattrappe verbunden, um bei Betätigung des äußeren Schalters oder der äußeren Schalterattrappe die eine oder die mehreren Flüssigkeiten oder Fluide zu verspritzen. Die Flüssigkeiten werden bevorzugt in Richtung der Taste, und zugleich an dieser vorbei in Richtung eines Gesichts eines Angreifers bzw. Betätigers verspritzt. Die Funktion kann dabei der eines "Spritzring-Scherzartikels" entsprechen. Die Fluide können dabei eine schlecht entfernbare Farbe, eine Capsaicin oder reizstoffhaltige Flüssigkeit oder eine geruchsintensive Flüssigkeit wie Buttersäure oder Stinktiersekret umfassen. Die eingesetzten Mengen der Flüssigkeit sind dabei sehr gering und umfassen nur wenige Tropfen oder Milliliter, und auch die Reichweite der Spritzvorgangs kann auf ca. eine Armlänge bzw. ca. einen Meter begrenzt werden, um keine anderen Personen zu gefährden.

Bei einer weiteren Ausführungsform der tragbaren Sirene, ist der äußere Schalter und/oder die äußere Schalterattrappe beleuchtet, vorzugsweise umfasst die tragbare Sirene eine Einrichtung, die den äußeren Schalter und/oder die äußere Schalterattrappe bei oder nach Auslösung des Tonsignals beleuchtet. Diese Ausführung soll eine Person auf den äußeren Schalter und/oder die äußere Schalterattrappe hinweisen, um sie dazu zu verleiten den äußeren Schalter und/oder die äußere Schalterattrappe zu betätigen.

Bei einer weiteren Ausführungsform der tragbaren Sirene, ist der äußere Schalter und/oder die äußere Schalterattrappe zur besseren Erkennbarkeit farblich und/oder durch ein Symbol, vorzugsweise ein Ein-/Aus-Schaltsymbol oder ein Ton-Aus-Symbol markiert. Diese Ausführung soll eine Person, die sich durch die tragbare Sirene bzw. durch das aktivierte Tonsignal gestört fühlt dazu verleiten den äußeren Schalter bzw. die äußere Schalterattrappe zu betätigen. Das Symbol kann ebenfalls beleuchtet sein, bzw. der Schalter kann im "Nachtdesign" ausgeführt sein, bei dem das Symbol auf dem Schalter und eventuell eine Rundumbeleuchtung des äußeren Schalters bzw. der äußeren Schalterattrappe beleuchtet werden. Diese Ausführung ist besonders für Situationen ausgelegt, bei denen ein Angriff an einem Abend oder in der Nacht erwartet wird, dem durch die tragbare Sirene begegnet werden soll. Das Nachtdesign ermöglicht es insbesondere auch bei schlechten Sichtverhältnissen einen Angreifer dazu zu verleiten, durch Betätigen des äußeren Schalters oder der äußeren Schalterattrappe zu versuchen, das Tonsignal der aktivierten tragbaren Sirene auszuschalten.

Eine zusätzliche Ausführungsform der tragbaren Sirene umfasst weiter eine Lampe und/oder ein Stroboskop-Blitz, die bzw. der bei eingeschaltetem Tonsignal aktiviert wird bzw. werden. Der Stroboskopblitz kann auch erst bei Betätigung des äußeren Schalters bzw. der äußeren Schalterattrappe ausgelöst werden, um einen Angreifer dazu zu veranlassen, die tragbare Sirene, die nach Betätigung des äußeren Schalters bzw. der äußeren Schalterattrappe als Spurenträger dient wegzuwerfen, und sich von der Tonsignal- und Lichtblitzquelle zu entfernen. Ein Vorteil der späteren Aktivierung des Stroboskopblitzes besteht darin, dass ein Angreifer vor einer Betätigung des äußeren Schalters bzw. der äußeren Schalterattrappe nicht geblendet wird, und so ein oder mehrere Symbole auf dem äußeren Schalter bzw. der äußeren Schalterattrappe besser erkennen kann. Es kann auch vorgesehen sein, den Stroboskopblitz in den Farben und Impulsmustern von Einsatzfahrzeugen der örtlichen Sicherheitskräfte blitzen zu lassen. Mit so einem Blitzmuster könnte beispielsweise ein Fahrer eines Entführungs- bzw. Fluchtfahrzeuges dazu veranlasst werden, sich früher als geplant von einem Ort eines Angriffs zu entfernen, und so eine Flucht bzw. Entführung von Personen, die sich noch nicht in dem Fahrzeug befinden zu verhindern.

Weiter kann die tragbare Sirene eine lokale oder globale Positionierungskomponente und/oder eine Kommunikationskomponente umfassen, die bevorzugt bei eingeschaltetem Tonsignal aktiviert werden. Eine globale Positionierungskomponente kann einen GPS-Empfänger, einen GLONAS-Empfänger, einen Galileo-Empfänger, einen Beidou-Empfänger oder auch einen IRNSS-Empfänger umfassen. Diese Satelliten-gestützten Positionierungssysteme gestatten es einen Ort einer Auslösung des Tonsignals als Zeichen für einen Angriff oder eine Notlage zu ermitteln. Eine Kommunikationskomponente kann beispielsweise ein Mobilfunk-basiertes System umfassen, über das die aktuelle Position der tragbaren Sirene, die von der Positionierungskomponente ermittelt wurde, an eine Leitstelle von Sicherheitsorganen weitergeleitet wird. Daraufhin kann ein Einsatzwagen oder eine Streife zu einem Ort eines Angriffs geleitet werden, und zusätzlich können die Sicherheitsorgane die tragbare Sirene als Spurenträger sicherstellen, wobei die Spuren später bei einer Ermittlung einer Identität eines Angreifers oder bei einem späteren Gerichtsprozess verwendet werden können.

Die tragbare Sirene kann in einer weiteren Ausführungsform weiter eine Knall-Signaleinrichtung umfassen, die bei Betätigung des äußeren Schalters bzw. der äußeren Schalterattrappe bevorzugt bei eingeschaltetem Tonsignal ausgelöst wird. Die Knall-Signaleinrichtung kann einen einzelnen Knall oder eine Sequenz mehrerer Knalle erzeugen. Ein Knall kann durch eine Zündkapsel oder eine Platzpatrone erzeugt werden. Das bei dem Knall freiwerdende Gas kann mit einer Leitung unter den Schalter / die Schalterattrappe geleitet werden, um einen starken Fingerabdruck zu erzeugen. Es ist ebenfalls möglich das bei dem Knall freiwerdende Gas zu einer Oberfläche der tragbaren Sirene zu leiten, um an einer Hand die die tragbare Sirene hält Schmauchspuren zu hinterlassen, die beispielsweise mit einem Paraffintest nachgewiesen werden können. Auch hier sollte die Größe der Ladung bzw. der Zündkapsel bzw. des Zündhütchens so gewählt werden dass keine bleibenden Schäden bei der Person zu erwarten sind, die die Knall-Signaleinrichtung auslöst, schon allein um bei Fehlbedienungen durch den Benutzer bleibende Schäden zu vermeiden.

Eine zusätzliche Ausführung der tragbaren Sirene umfasst einen äußeren Schalter, der eingerichtet ist, das Tonsignal nicht auszuschalten, sondern lediglich kurzzeitig bevorzugt für 0,5 bis 5, weiter bevorzugt 1 bis 4 und noch weiter bevorzugt 1,5 bis 3 Sekunden zu unterbrechen. Dies zeigt der Person die den Schalter ein erstes Mal betätigt, dass der äußere Schalter tatsächlich eine Funktion hat, weshalb diese Person, nach der Unterbrechung des Tonsignals und beim Wiedereinsetzen des Tonsignals, den äußeren Schalter wieder betätigen wird. Diese Zeit der "Wiederbetätigung" unterbricht einen Angriff, und lenkt einen Angreifer ab. Der Täter wird im Gefühl, die Sirene abgeschaltet zu haben, diese fallen lassen und den Angriff fortsetzen, nur um dann wieder und wieder erneut aufgeschreckt zu werden. Diese Ablenkung kann einer angegriffenen Person eine Flucht vor dem Angriff oder einer möglichen Entführung ermöglichen. Es kann ebenfalls vorgesehen sein, dass diese Unterbrechungsfunktion das Tonsignal unabhängig davon wieder einschaltet ob der äußere Schalter betätigt wird oder nicht, um zu verhindern, dass ein Angreifer das Tonsignal durch permanentes Betätigen des Schalters dauerhaft unterbricht.

In einer Abwandlung kann der erste Alarm um einige Sekundenbruchteile oder sogar Sekunden verzögert werden. In dieser Gestaltung wird das Opfer bevorzugt das Gerät vor den Angreifer werfen. Der Angreifer wird über das Gerät steigen und dann durch die nun hinter ihm liegende und Signal gebende Sirene erschreckt und zum Abwenden vom Opfer gezwungen werden.

Bei einer zusätzlichen beispielhaften Ausführungsform der tragbaren Sirene umfasst diese weiter eine Tonaufzeichnungsvorrichtung und/oder eine Kamera. Die Tonaufzeichnung ist vor allem bei unterbrochenen Tonsignalen oder bei wie oben vorgeschlagenen kurzzeitig ausgeschalteten Tonsignalen interessant, um akustische Spuren aufzuzeichnen. Während das Tonsignal abgegeben wird dürfte hingegen keine oder nur eine sehr eingeschränkt sinnvolle Tonaufzeichnung möglich sein. Die Tonaufzeichnungsvorrichtung kann so ausgelegt sein, dass bei Betätigung der tragbaren Sirene eine Tonaufzeichnung gestartet wird, während das Tonsignal erst nach einer Verzögerung von 1 bis 3 Sekunden ausgelöst wird. Bei einem Tonsignal, dass Pausen aufweist kann ebenfalls während der Signalpausen eine Tonaufzeichnung sinnvoll sein.

In einer Abwandlung kann eine Kamera so an der tragbaren Sirene angebracht sein, dass sie neben dem äußeren Schalter in einer Richtung aufnimmt, in der ein Gesicht einer Person erwartet wird, die den Schalter betätigt. Der äußere Schalter sollte dabei so an der tragbaren Sirene angeordnet sein, dass er bevorzugt mit dem Daumen betätigt werden kann während die restlichen Finger ein Gehäuse der tragbaren Sirene umgreifen. Wird die tragbare Sirene so gehalten, dass eine Person den äußeren Schalter am einfachsten betätigen kann, sollte die Kamera an dem den Schalter betätigenden Daumen vorbei ein Gesicht eines Betätigers aufnehmen. Es ist möglich die Kamera bei Betätigung des äußeren Schalters ein Einzelbild oder eine Bildserie aufnehmen zu lassen. Es ist jedoch bevorzugt, die Kamera als Videokamera zu verwenden, und nach oder bei einer Aktivierung der tragbaren Sirene die Kamera ein Video für 5, bevorzugt 10 oder sogar 15 Minuten aufnehmen zu lassen. Die Kamera ist bevorzugt nicht von außen als solche zu erkennen, und kann beispielsweise in einer Schraubenattrappe versteckt sein. Ein aktiviertes Stroboskoplicht kann dabei ebenfalls als Blitzlicht dienen, um bei ungünstigen Lichtverhältnissen ein besseres Bild eines Angreifers oder Betätigers des äußeren Schalters zu erzielen. Ein Video und eine Tonaufzeichnung kann ebenfalls eine Reaktion der Person aufzeichnen, die den Schalter oder die Schalterattrappe betätigt, um das Gerät noch weiter zu verbessern, insbesondere um herauszufinden welche der von der tragbaren Sirene erzeugten Aktivitäten auf ein Betätigen des äußeren Schalters oder der äußeren Schalterattrappe des Gerätes den größten Beitrag zu einem Abbruch eines Angriffs leistet. Weiterhin kann die von dem Angreifer aufgezeichnete Reaktion ebenfalls zu Fahndungszwecken und insbesondere zur Öffentlichkeitsfahndung beispielsweise im Internet oder im Rundfunk verwendet werden. Zusätzlich können die von dem Angreifer aufgezeichneten Reaktionen auf die tragbare Sirene für Werbezwecke des Herstellers der tragbaren Sirene verwendet werden.

Eine zusätzliche Ausführung der tragbaren Sirene ist weiter mit Hautkontakten und einem Elektroimpuls-Generator versehen. Die Hautkontakte sind mit dem Elektroimpuls-Generator verbunden. Die tragbare Sirene ist konfiguriert, Elektroimpulse von dem Elektroimpulsgerät an die Hautkontakte abzugeben, wenn der äußere Schalter oder die äußere Schalterattrappe betätigt wird. Dies soll dazu führen, dass der Angreifer die aufgehobene Sirene fallen lässt. Es kann auch vorgesehen sein, dass die tragbare Sirene konfiguriert ist, den Elektroimpuls-Generator so zu steuern, dass erst bei einer zweiten Betätigung des äußeren Schalters bzw. der äußeren Schalterattrappe ein Elektroimpuls an die Hautkontakte abgegeben wird. Die Form des Elektroimpulses kann ebenfalls entweder als Gleichstromimpuls oder als Wechselstromimpuls ausgeführt werden. Ein Gleichstromimpuls kann bewirken dass der Angreifer die tragbare Sirene fester greift und so deutlichere Spuren an dem Gerät hinterläßt Ein Wechselstromimpuls kann bewirken dass der Angreifer die tragbare Sirene sofort fallen lässt. Damit kann erreicht werden, dass der Angreifer die Sirene erst wieder aufheben muss, um zu versuchen sie erneut auszuschalten. Ein weiterer Vorteil einer späteren Betätigung liegt darin, dass eine Person die die tragbare Sirene versehentlich auslöst, auch bei einer Fehlbedienung nicht sofort einen Schlag erhält.

Eine zusätzliche Ausführungsform der vorliegenden Erfindung stellt eine tragbare Sirene bereit die über eine trennbare mechanische, elektrische und/oder Funk- Schnittstelle mit einem Notrufgerät verbunden werden kann, wobei die tragbare Sirene konfiguriert ist, bei einer Trennung der Schnittstelle zu einem verbundenen Notrufgerät das Tonsignal auszulösen.

Diese Ausführung stellt eine Kombinationsmöglichkeit bereit, bei der ein Notrufgerät bei einer Trennung einerseits einen Notruf absetzt und andererseits die tragbare Sirene aktiviert wird, ein Tonsignal auszugeben, um akustisch auf eine Notsituation wie einen Angriff hinzuweisen. Es ist ebenfalls möglich die tragbare Sirene mit einem Abreiß-Schalter oder auch Abzugsstift zu versehen, wobei bei einem Abreißen oder Herausziehen des Abzugsstifts das Tonsignal sofort oder nach einer Verzögerung ausgelöst wird. Das Tonsignal lässt sich dann nur noch abschalten, wenn der Abzugsstift wieder eingesetzt wird.

Es ist ebenfalls möglich das Tonsignal erst wieder nach einem Wiederverbinden der tragbaren Sirene mit dem Notrufgerät über die mechanische, elektrische und/oder FunkSchnittstelle durch Drücken des inneren Schaltelements oder des äußeren Schalters abzuschalten. Hierzu kann eine einfache Schaltung gewählt werden, bei der der äußere Schalter zum Ausschalten des Tonsignals verwendet werden kann, wenn die Verbindung über die Schnittstelle wieder hergestellt wurde, wobei bevorzugt bei verbundener Schnittstelle der äußere Schalter nur als Aus-Schalter funktioniert, ohne dass die Verletzungs-, Kennzeichnungs- oder weiteren oben beschriebenen Funktionen aktiviert werden.

Die vorliegende Erfindung betrifft ebenfalls ein Notrufgerät mit einer lokalen oder globalen Positionierungskomponente und einer Kommunikationskomponente sowie einer Notrufauslösevorrichtung. Das Notrufgerät kann über eine trennbare mechanische, elektrische und/oder Funk- Schnittstelle mit einer tragbaren Sirene wie sie vorstehend beschrieben wurde verbunden werden. Das Notrufgerät ist weiter konfiguriert bei einer Trennung der Schnittstelle zu einer über die Schnittstelle verbundenen tragbaren Sirene, einen Notruf über die Kommunikationskomponente abzusetzen.

Bei einer weiteren Ausführung des Notrufgeräts ist dieses konfiguriert , bei einer Trennung der Schnittstelle das Tonsignal über eine Funkverbindung auszulösen. Hier ist das innere Schaltelement zum Ein- und Ausschalten der tragbaren Sirene als ein funk-aktiviertes Schaltelement ausgeführt, wobei damit sämtliche Versuche, die tragbare Sirene selber auszuschalten ohne eine Bedienung des Notrufgeräts von vorneherein unmöglich und damit zum Scheitern verurteilt sind. Die örtliche Trennung bzw. die Fernbedienung der tragbaren Sirene über das Notrufgerät verwischt ebenfalls den funktionalen Zusammenhang von Fernbedienung und tragbarer Sirene. Ein weiterer Vorteil besteht darin, dass bei einer Fehlauslösung der tragbaren Sirene diese am Notrufgerät ausgeschaltet werden kann, ohne dass Spurenaufnehmer / -träger an der tragbaren Sirene angefasst werden müssten.

Bei einer weiteren Ausführung des Notrufgeräts ist dieses als anderer Gegenstand, wie beispielsweise ein Schmuckgegenstand, ein Schlüsselanhänger, eine Tampon- oder Taschentuchbehälter, eine Zigarettenschachtel oder ein Flachmann getarnt. Es können weitere und andere Formen des Notrufgeräts vorgesehen sein, die die tatsächliche Funktion verschleiern.

Gemäß einem weiteren Aspekt der vorliegenden Erfindung wird eine Kombination aus tragbarer Sirene und Notrufgerät bereitgestellt, wobei die tragbare Sirene und das Notrufgerät gemäß den vorstehend beschriebenen Ausführungen ausgeführt sind. Diese Kombination gestattet es einerseits nur eine Komponente bzw. Einheit für die eigene Sicherheit mitzuführen, ohne dass es notwendig wäre sowohl das Notrufgerät als auch die tragbare Sirene als zwei einzelne Komponente mitzuführen. Insbesondere bei Verwendung einer mechanischen und elektrischen (galvanischen) Verbindung kann dabei die Sirene aus einer Stromversorgung des Notrufgeräts mitversorgt werden, sodass eventuell lediglich physikalische Stromspeicher wie "Goldcap^{tm}" Kondensatoren ausreichen um eine Stromversorgung der tragbaren Sirene nach einem Trennen von dem Notrufgerät aufrecht zu erhalten. Somit ist es nicht mehr notwendig den Zustand der Stromversorgung der tragbaren Sirene zu überwachen oder zu prüfen, da diese von dem Notrufgerät sichergestellt wird.

Tragbare Sirene und/oder Notrufgerät, wobei die tragbare Sirene und/oder das Notrufgerät wie vorstehend beschrieben ausgeführt sind, wobei das Tonsignal an der tragbaren Sirene erst ausgelöst wird, wenn zwei verschiedene Auslösevorrichtungen an dem Notrufgerät ausgelöst werden. Die Auslösevorrichtungen können als ein Schalter, ein Taster, eine Reißleine bzw. ein Zugschalter ausgeführt sein. Die tragbare Sirene umfasst Vorrichtungen, die bei Fehlbedienung zu Verletzungen führen können, um dies auszuschließen, ist es vorgesehen dass die tragbare Sirene und/oder das Notrufgerät gegen eine Fehlauslösung des Tonsignals geschützt sind. In einer Ausführung wird die tragbare Sirene durch einen Schalter an einem Gehäuse aktiviert, der sich erst betätigen lässt, wenn ein Zugschalter, eine Zugsperre oder eine Reißleine betätigt worden sind. Zu einer Auslösung ist es einerseits notwendig, die Zugleine zu spannen und einen Schalter zu aktivieren.

Bei einer weiteren Ausführungsform der tragbaren Sirene und/oder des Notrufgeräts, verdeckt eine mechanische Schnittstelle den äußeren Schalter und/oder die äußere Schalterattrappe, solange die tragbare Sirene und das Notrufgerät miteinander über die mechanische Schnittstelle verbunden sind, oder der äußere Schalter und/oder die äußere Schalterattrappe werden durch eine Abdeckung verdeckt solange das Tonsignal nicht aktiviert ist. Ein abgedeckter äußerer Schalter und/oder eine abgedeckte äußere Schalterattrappe haben den Vorteil, dass der äußere Schalter und/oder die äußere Schalterattrappe nicht betätigt werden können, solange das Tonsignal nicht aktiviert ist, bzw. die tragbare Sirene nicht von dem Notrufgerät getrennt ist. Dadurch kann sichergestellt werden, daß eine Fläche des äußeren Schalters und/oder der äußeren Schalterattrappe, die einen Fingerabdruck einer Person abnehmen soll, der den Schalter bzw. die Attrappe betätigt, nicht schon vorher durch andere Fingerabdrücke verschmutzt bzw. unbrauchbar gemacht wird.

Im Folgenden wird die vorliegende Erfindung anhand von Figuren von beispielhaften nichtbeschränkenden Ausführungsformen beschrieben.
Figuren 1A bis 1C stellen eine grundlegende Ausführungsfonn der vorliegenden Erfindung dar.
Figuren 2A bis 9 stellen Weiterentwicklungen der grundlegenden Ausführungsform dar.
Figuren 10A und 10B zeigen ein erfindungsgemäßes Notrufgerät, das mit einer der tragbaren Sirenen der Figuren 1 bis 8 kombiniert ist.

Sowohl in der Beschreibung als auch in den Figuren werden gleiche oder ähnliche Bezugszeichen verwendet um auf gleiche oder ähnliche Komponenten und Elemente Bezug zu nehmen. Aus Gründen der Knappheit wird darauf verzichtet jede einzelne Komponente in der Beschreibung jeder Figur zu wiederholen, sofern sie bereits in einer früheren Figur erwähnt wurde und lediglich eine redundante Wiederholung darstellen würde. Es ist eine Bezugszeichenliste beigefügt.

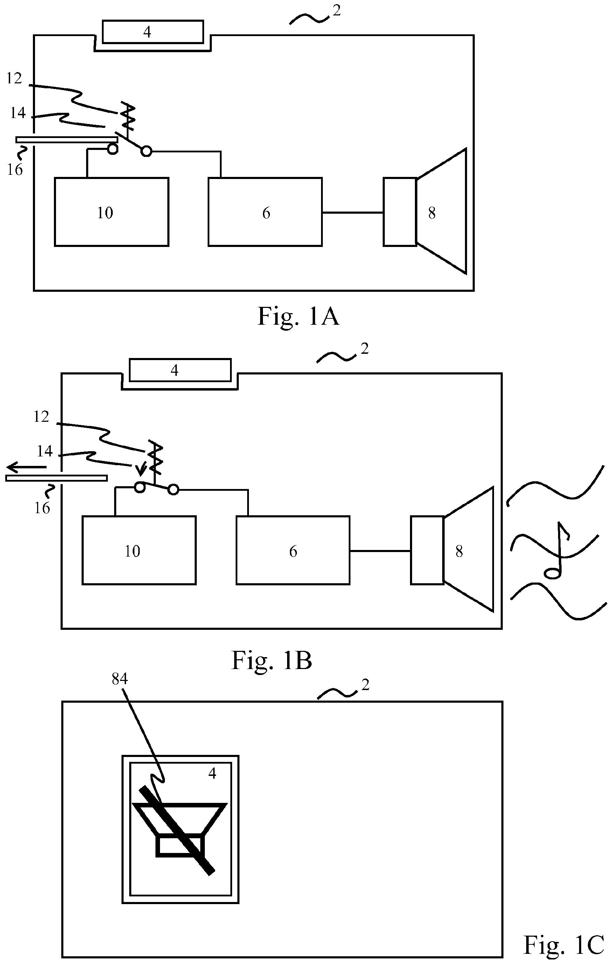

Figuren 1A bis 1C stellen eine grundlegende Ausführungsform der vorliegenden Erfindung dar. In Figur 1A ist eine erfindungsgemäße tragbare Sirene 2 dargestellt. Die Sirene umfasst ein nicht näher bezeichnetes Gehäuse. Die tragbare Sirene umfasst ebenfalls einen äußeren Schalter 4 der hier als äußere Schalterattrappe ausgeführt ist, die oben an dem Gehäuse angebracht ist, jedoch keine technische Funktion bezüglich des Erzeugens eines Tonsignals bzw. Akustiksignals erfüllt. In dem Gehäuse ist ein elektroakustischer Wandler oder auch Lautsprecher 8 angebracht, der über eine Steuereinheit 6 angesteuert wird. Der Lautsprecher 8 kann direkt das Tonsignal erzeugen, oder bei eingehender Stromversorgung von dem Steuergerät 6 selbst ein Tonsignal erzeugen. Im zweiten Fall ist zumindest ein Teil des Steuergeräts 6 in dem Lautsprecher 8 integriert. Das Steuergerät 6 ist über das innere Schaltelement 12, das über die Feder 14 als selbstschließender Schalter ausgeführt ist mit einer Stromversorgung 10 verbunden. Das innere Schaltelement 12 wird über das Auslöseelement 16 daran gehindert sich zu schließen und das Steuergerät mit Strom zu versorgen. Dies ist der ausgeschaltete Ausgangszustand der tragbaren Sirene 2.

In Figur 1B wird das Auslöseelement 16 in Pfeilrichtung aus dem Gehäuse gezogen. Ohne das Auslöseelement 16 Schließt die Feder 14 die Kontakte des inneren Schaltelements 12, und die Stromversorgung versorgt das Steuergerät 6 mit Strom. Das Steuergerät 6 wiederum versorgt den Lautsprecher 8 mit Strom bzw. einem elektrischen Signal, woraufhin dieser ein Tonsignal ausgibt. In diesem Zustand wird die tragbare Sirene bevorzugt fallengelassen. Ein Angreifer wird sich durch das Tonsignal gestört fühlen, da es bevorzugt mit einer Lautstärke ausgestrahlt wird, das oberhalb einer Schmerzgrenze liegt. Das Tonsignal zieht Aufmerksamkeit auf sich, die ein durchschnittlicher Angreifer wie auch eine entsprechende Strafverfolgung vermeiden will.

In Figur 1C ist die tragbare Sirene 2 dargestellt, wie sie ein gestörter Angreifer wahrnimmt. Ein formschön rechteckiges Gehäuse mit einem großen freundlich gestalteten Knopf der durch ein aufgebrachtes Symbol 84 eine Ausschaltfunktion des Tonsignals verspricht. Im Idealfall ist hier bereits der Angreifer so von seinem ursprünglichen Ziel abgelenkt, dass die angegriffene Person fliehen kann. Der Angreifer wird den äußeren Schalter 4 betätigen und verwirrt feststellen, dass das Tonsignal nicht aufhört, und entweder eine weitere Betätigung versuchen, und nach spätestens 4 weiteren Versuchen aufgeben, und die tragbare Sirene wegwerfen und flüchten, da sich der Ton nicht ausschalten lässt. Die Zeit der Verwirrung wird hier genutzt, um einem Opfer wertvolle Sekunden Vorsprung für eine Flucht zu verschaffen, sodass der gestörte und verwirrte Täter von seiner Tat ablässt und ebenfalls flüchtet.

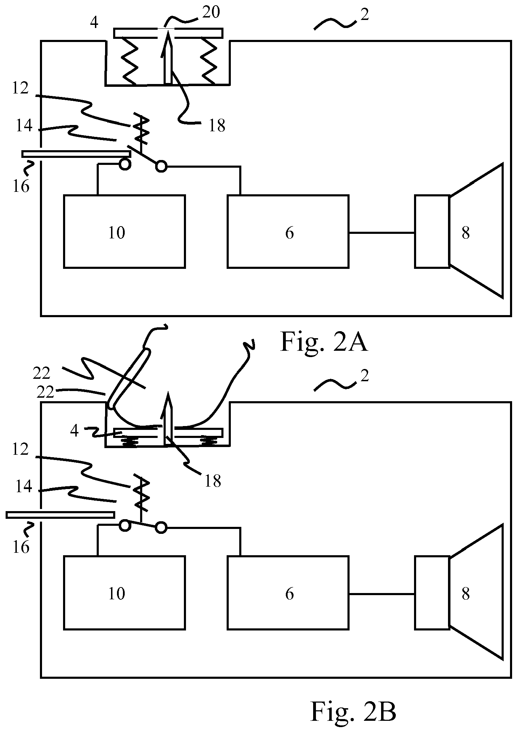

Figuren 2A und 2B stellen eine Ausführung der tragbaren Sirene dar, deren äußerer Schalter 4 mit einem Verletzungsmittel 18 in Form einer Nadel oder Hohlnadel oder einer Klinge versehen ist. Der äußere Schalter 4 ist mit einer, mit einer Membran 20 verschlossenen Öffnung versehen, die von dem Verletzungsmittel 18 durchdrungen werden kann. Das Verletzungsmittel 18 ist mit einem Widerhaken 20 versehen, der dazu dient eine Gewebeprobe von einer Fingerspitze zu entnehmen. Der äußere Schalter 4 ist wie in Figur 1 als Schalterattrappe ausgeführt.

Figur 2B zeigt die tragbare Sirene 2 von Figur 2A, wobei die äußere Schalterattrappe von einer Finger oder Daumenspitze 22 betätigt wird. Der Lautsprecher 8 sendet ein Tonsignal aus (nicht dargestellt) da das innere Schaltelement 14 geschlossen ist. Die äußere Schalterattrappe 4 wird durch eine Finger oder Daumenspitze 22 heruntergedrückt, wobei das Verletzungsmittel 18 zuerst die Membran 20 und dann die haut der Daumenspitze 22 durchdringt. Eine durch das Verletzungsmittel 18 ausgelöste Schmerzreaktion wird die Person die die äußere Schalterattrappe 4 betätigt hat, dazu veranlassen, von der Betätigung abzulassen und schmerzerfüllt die tragbare Sirene fortzuwerfen. Dabei bleibt eine kleine Gewebe- oder Blutprobe unter dem Widerhaken 20 zurück und kann später zur Erstellung eines genetischen Fingerabdrucks des Betätigers verwendet werden, nachdem die tragbare Sirene von Sicherheitskräften sichergestellt wurde.

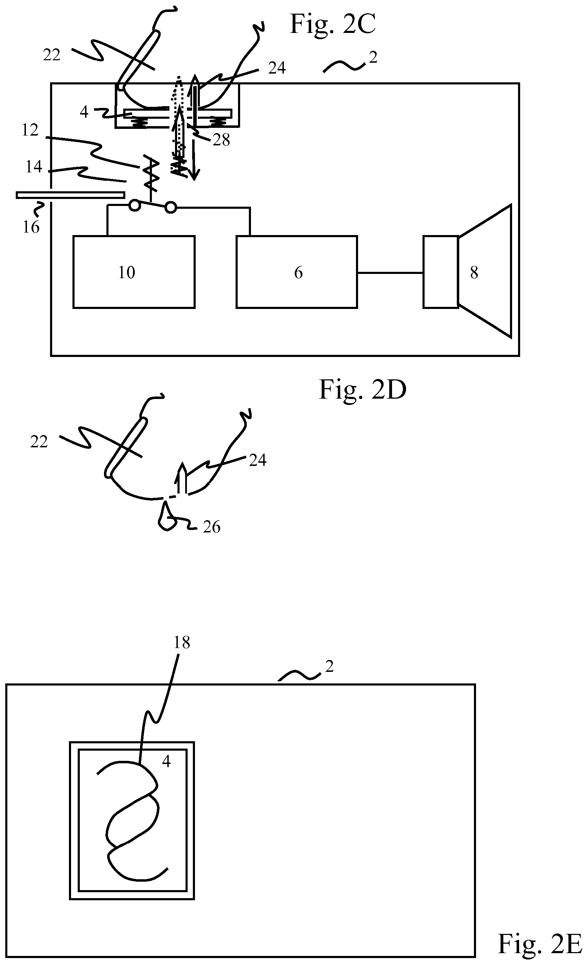

Figur 2C zeigt eine zusätzliche Variante, bei der das Verletzungsmittel 18 zusätzlich mit einer Rückzugsvorrichtung 28 versehen ist. Blut- und Gewebeproben sind lediglich dann verwertbar, wenn sie nicht durch andere weitere Blut- und Gewebeproben verunreinigt sind. In der vorliegenden Ausführung wird daher das Verletzungsmittel 18 nach dem Zustechen in ein Gehäuse der tragbaren Sirene 2 zurückgezogen, um eine Verunreinigung der Blut- und Gewebeproben unter dem Widerhaken 20 zu vermeiden.

Um den Täter besser identifizieren zu können kann diese und/oder alle weiteren Verletzungsmittel weiter mit einer Beschichtung beispielsweise mit Silbernitrat versehen sein. Durch eine Silbernitratbeschichtung kann die von dem Verletzungsmittel 18 erzeugte Verletzung zusätzlich markiert werden. Es ist ebenfalls möglich weitere chemische Komponenten an dem Verletzungsmittel anzubringen um später eine bessere Identifizierung des Täter / Angreifers / Betätigers des äußeren Schalters zu ermöglichen.

In Figur 2C umfasst das Verletzungsmittel weiter eine kleine Harpune 24 die in die Daumenspitze 22 bevorzugt ganz eindringt und in dieser verbleibt. Auch diese Harpune 24 kann mit einer mikroskopischen Inschrift versehen sein, die einen Arzt der mit einer Behandlung der Verletzung beauftragt ist, dazu veranlasst die behandelte Person eventuell den Sicherheitskräften zu überstellen. Somit lässt sich eine Ergreifung eines Täters / Angreifers / Betätigers des äußeren Schalters relativ leicht erreichen. Um eine Behandlung durch einen Arzt zu erreichen kann es ebenfalls vorgesehen sein, dass die Harpune ein Schmerzmittel d.h. ein Schmerz-erzeugendes-Mittel umfasst, um den Täter / Angreifer / Betätigers des äußeren Schalters dazu zu veranlassen einen Arzt aufzusuchen. Es kann auch vorgesehen sein, eine Kombination von schmerzunterdrückenden Mitteln und Schmerz erzeugenden Mitteln zu verwenden, die nacheinander freigesetzt werden, um die Schmerzursache zuerst zu verschleiern, und erst später einen Arztbesuch zu provozieren, nachdem ein Zusammenhang zwischen Angriff und Betätigung und den Schmerzen schon nicht mehr so offensichtlich ist.

Figur 2D zeigt eine Daumenspitze, die eine erste Verletzung durch das Verletzungsmittel 18 und eine weitere Verletzung durch die Harpune 24 umfasst, wobei aus der ersten Verletzung Blut 26 austritt. Durch austretendes Blut hinterlässt der Täter sehr viel mehr Spuren als ohne die erste Verletzung. Es kann ebenfalls vorgesehen sein, dass ein Gerinnungshemmer und/oder ein Histamin an dem Verletzungsmittel angebracht oder mit diesem injiziert werden.

Die Ausführungen der Figuren 2A bis 2D können einen Schalter umfassen, der eine leichte Fehlfunktion bzw. ein Klemmen vortäuscht. Dies kann mit Sollbruchstellen erreicht werden, die eine Funktion des äußeren Schalters wie ein Verklemmen andeuten. Diese scheinbare Fehlfunktion kann zusätzlich mit einer leichten Tonveränderung und Lautstärkeabschwächung bei Betätigung bis zur Sollbruchstelle kombiniert werden. In diesem Fall erscheint einer Person die den Schalter betätigen will, das dieser zu klemmen scheint, und wird diese Person veranlassen den Schalter mit größerer Kraft zu betätigen. Bei Betätigung mit einer deutlich erhöhten Kraft kann sichergestellt werden, dass das Verletzungsmittel 18 tief genug in die Finger- oder Daumenkuppe eindringt um sicher eine Blut- oder Gewebeprobe zu entnehmen. Die erhöhte Kraft kann ebenfalls dazu beitragen die Harpune tief genug in das Fleisch zu bohren, damit sie vollständig unter der Haut verschwindet, und nicht vor Ort wieder herausgezogen werden kann. Die Verletzungsvorrichtung ist bevorzugt ausgelegt, auch Handschuhe durchdringen zu können, und Gewebe- und Blutproben durch einen Handschuh hindurch entnehmen zu können.

Eine relativ kleine aber schmerzhafte und relativ stark blutende Wunde kann einen Angreifer dazu bringen, von seinem Angriff abzulassen, womit ein Hauptziel der vorliegenden Erfindung sofort erreicht werden kann.

Figur 2E zeigt Verletzungsmittel 18 in Form eines Symbols. Als Symbol wurde hier ein gespiegeltes Paragraphenzeichen verwendet. Das Verletzungsmittel 18 hinterlässt hier eine Wunde oder Verletzung in Form eines Paragraphen, was eine behandelnde Person darauf hinweisen soll dass diese Verletzung rechtlich relevant, d.h. in Zusammenhang mit einem Straftatbestand entstanden ist. Im Prinzip sind auch jede Art von anderen Symbolen wie Anarchie-Zeichen, oder andere einprägsame Symbole möglich, die einen behandelnden. Arzt dazu veranlassen sich die Verletzung und die behandelte Person besonders gut einzuprägen, oder sogar Kollegen aufgrund der besonderen Form der Verletzung herbeizurufen. Das Symbol sollte auf jeden Fall nicht durch einen einfachen geraden Schnitt mit einer Klinge entstehen können, sodass eine behandelnde Person auf jeden Fall nach der Herkunft und den Umständen sowie der Ursache der Verletzung fragen wird. Kreuze, Sterne, Smileys oder auch Buschstaben oder Buchstabenkombinationen sind ebenfalls als Symbole geeignet.

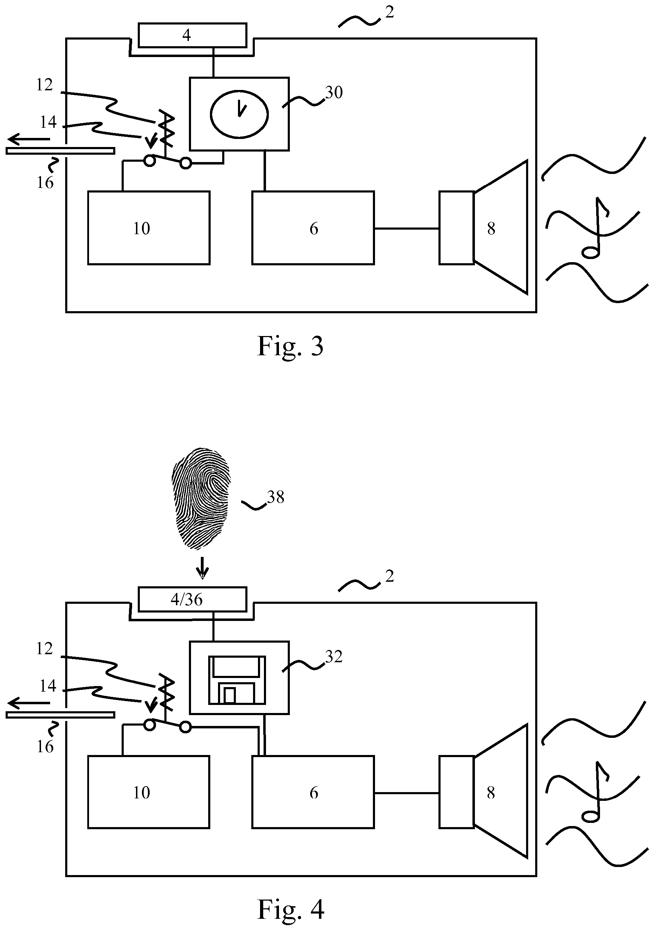

Figur 3 stellt eine zusätzliche Ausführungsform dar, bei der der äußere Schalter 4 tatsächlich eine Funktion erfüllt. Die tragbare Sirene 2 ist zusätzlich mit einem durch den äußeren Schalter 4 aktivierbaren Verzögerungselement oder Zeitelement 30 versehen, das bei Betätigung durch den Schalter 4 die Erzeugung des Tonsignals durch eine Unterbrechung der Stromversorgung der Steuereinheit 6 bewirkt. Die Unterbrechung durch das Zeitelement 30 funktioniert ist ähnlich wie die Schlummerfunktion bei einem Wecker, unterbricht das Tonsignal jedoch nur für wenige Sekunden. Genug, damit ein sich in Sicherheit wiegenden Angreifer die tragbare Sirene fortwerfen kann, kurz bevor diese wieder beginnt das Tonsignal auszugeben. Im Idealfall wird sich der Angreifer die Sirene wieder und wieder aufheben, und so von einem Angriff ablassen, oder einer angegriffenen Person eine Flucht ermöglichen.

Figur 4 stellt eine Ausführung mit einem äußeren Schalter 4 dar, der gleichzeitig als Fingerabdrucksensor 36 bzw. elektronischer Fingerabdrucksensor ausgeführt ist. Bei jeder Betätigung des äußeren Schalters 4 kann so ein typischer Verbrecher-Fingerabdruck 38 eines Angreifers / Betätigers des Schalters 4 aufgezeichnet werden. Diese Ausführung hat den Vorteil gegenüber anderen Arten der Fingerabdruckaufzeichnung, dass mehrere Abbilder von Fingerabdrücken aufgezeichnet werden können, ohne dass die zusätzlichen Betätigungen vorherige Fingerabdrücke zerstören, da sie einfach zusätzlich in dem Speicherelement 32 gespeichert werden können. Somit kann ein Finder der bereits ausgelösten Sirene an einem Tatort, auch bei unbeabsichtigter Betätigung des äußeren Schalters keine Abbilder von gespeicherten Fingerabdrücken zerstören. Dies kann insbesondere mit den Verletzungsmitteln der Ausführung von Figur 2D kombiniert werden.

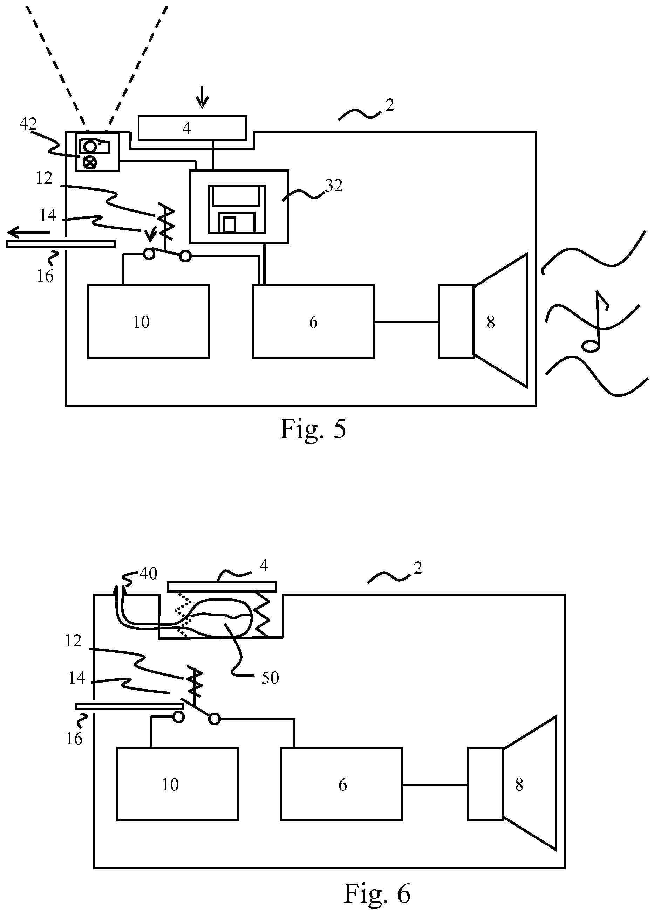

Figur 5 betrifft eine Ausführungsform bei der oberhalb des äußeren Schalters 4 eine Kamera- und Beleuchtungskomponente 42 vorgesehen sind, die durch eine Betätigung des äußeren Schalters 4 und oder bei Betätigung des inneren Schaltelements aktiviert werden können. Es ist möglich die Kamera- und Beleuchtungskomponente als Videokamera mit Tonaufzeichnung auszuführen, die eine Aufnahme direkt nach einer Aktivierung des inneren Schaltelements startet. Das Objektiv der Kamera ist dabei bevorzugt an dem Gehäuse der tragbaren Sirene 4 getarnt angebracht. Eine Beleuchtung kann bei Betätigung des äußeren Schalters 4 zugeschaltet werden, um das durch die gestrichelten Linien angedeutete Sichtfeld der Kamera auszuleuchten. Es ist jedoch ebenfalls möglich, die Kamera- und Beleuchtungskomponente 42 als Fotokamera zu betreiben, wobei eine Bildaufnahme oder eine Serienbildaufnahme bei Betätigung des äußeren Schalters 4 ausgelöst wird. Es kann insbesondere bei Tonsignalpausen auch eine Tonaufzeichnung sinnvoll sein, um den Täter / Angreifer zusätzlich anhand von Stimm-/Sprachcharakteristiken zu identifizieren.

Figur 6 betrifft eine tragbare Sirene 2, die zusätzlich mit einer Spritzvorrichtung 50 versehen ist die Spritzvorrichtung 50 ist als fluidgefüllter Balg ausgeführt. Bei Betätigung des äußeren Schalters 4 wird der Balg zusammengedrückt und sein flüssiger Inhalt wird über die Spritzdüse 40 neben dem äußeren Schalter 4 in Richtung einer den Schalter 4 betätigenden Person verspritzt. Eine einfache Ausführung kann wie ein Scherzartikel der als "Spritzring" bekannt ist ausgeführt sein. Komplexere Ausführungen können mehrere Druckbehälter, und mehrere Flüssigkeiten zur optischen, unsichtbaren und/oder olfaktorischen Markierung sowie zur Ablenkung der den Schalter betätigenden Person umfassen. Momentan wird eine Kombination von Silbernitratlösung, eine Capsaicinlösung, eine Mischung aus Skunksekret und Buttersäure sowie eine Lösung mit Fluoreszenzfarbstoff vorgeschlagen. Durch die große Nähe von maximal einer Armlänge reichen hier sehr kleine Mengen dieser Lösungen um eine Person relativ sicher zu markieren. Dabei sind wenige Milliliter für eine deutliche Markierung ausreichend. Auch diese Ausführungsform kann mit weiteren Elementen und Komponenten der vorstehenden Ausführungsformen kombiniert werden.

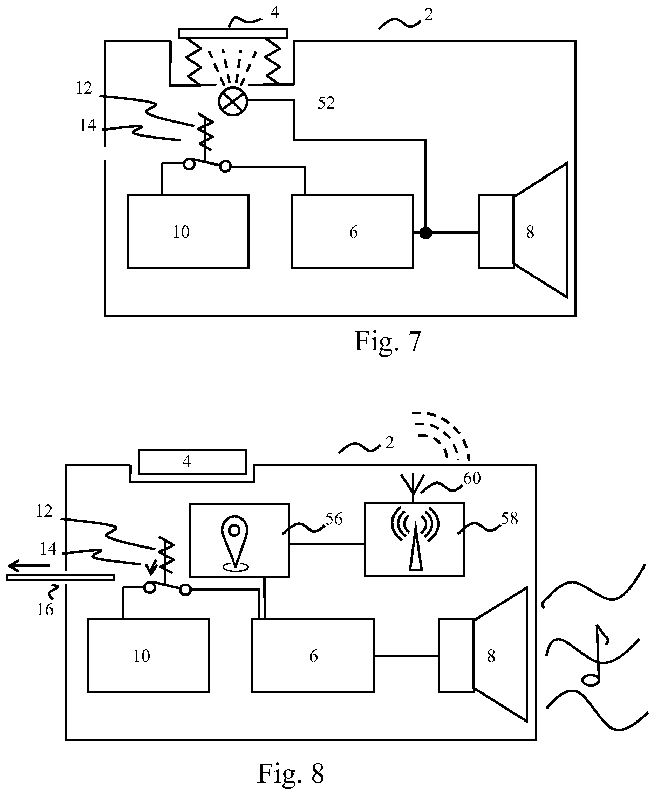

Figur 7 zeigt eine Ausführungsform der tragbaren Sirene 2, bei der der äußere Schalter 4 durchscheinend oder im Nachtdesign ausgeführt ist. Der Abzugsstift ist gezogen und das Tonsignal wird erzeugt (nicht dargestellt). Das Signal mit dem der Lautsprecher 8 von der Steuereinheit 6 versorgt wird, wird ebenfalls an eine Beleuchtung 52 des äußeren Schalters 4 geleitet, wodurch dieser beleuchtet wird. Die Beleuchtung erleichtert es einem Angreifer die tragbare Sirene zu finden, da eine akustische Lokalisierung insbesondere bei Nacht und bei Tönen die die Schmerzschwelle übersteigen schwierig ist. Wenn der äußere Schalter im Nachtdesign ausgeführt ist kann der Angreifer das "Ton-Aus" Symbol auch bei Nacht leicht erkennen. Die Beleuchtung hilft dabei die tragbare Sirene zu lokalisieren und einen Angreifer dazu zu verleiten, den äußeren Schalter zu betätigen.

Figur 8 zeigt eine Ausführungsform bei der die tragbare Sirene 2 mit einer GPS-Positionierungsvorrichtung 56 sowie einer Mobilfunk-Kommunikationsvorrichtung 58 mit einer Mobilfunk-Kommunikationsantenne 60 versehen ist. Bei Betätigung des inneren Schaltelements 14 oder bei Auslösung des Tonsignals steuert die Steuerung 6 die GPS-Positionierungsvorrichtung 56 an, um eine momentane Position der tragbaren Sirene 2 zu ermitteln. Ist die momentane Position ermittelt, wird diese an die Mobilfunk-Kommunikationsvorrichtung 58 übermittelt und über die Antenne 60 an einen Leitstelle oder einen Dienstanbieter weitergeleitet. Bei dieser Ausführung kann eine Positionsinformation dazu verwendet werden die tragbare Sirene als Spurenträger eines Angreifers leichter zu finden. Dies ist auch möglich wenn aus welchen Gründen auch immer die tragbare Sirene nach dem Angriff von einem Tatort entfernt wurde, da die Positionsdaten beispielsweise einmal pro Stunde oder alle 10 Minuten oder einmal am Tag aktualisiert werden können. Es ist auch möglich, um Fehlbedienungen zu vermeiden, dass die Positionsbestimmung und Weiterleitung erst nach einer Betätigung des äußeren Schalters gestartet wird, da ohne eine solche Betätigung vermutlich keine Spuren eines Täters an der tragbaren Sirene zu erwarten sind.

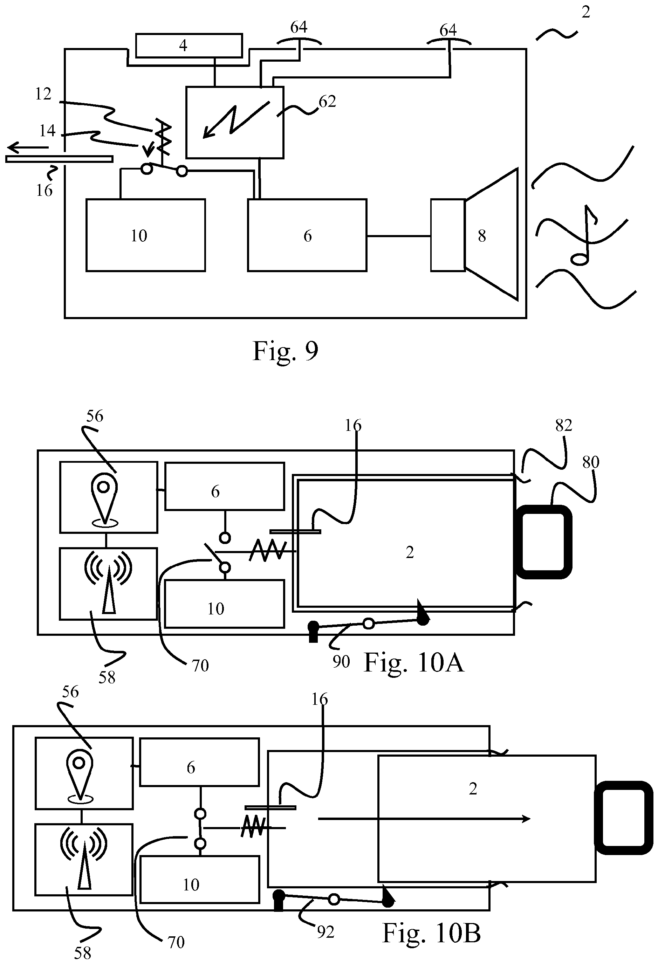

Figur 9 zeigt eine Ausführung bei der die tragbare Sirene weiter mit einem Elektro-Impulsgerät bzw. Hochspannungsgenerator versehen ist. Der Hochspannungsgenerator ist mit mindestens zwei außen an einem Gehäuse der tragbaren Sirene 2 verbunden. Die Hautelektroden 64 sind so angeordnet, dass eine arglose Person, die die tragbare Sirene aufhebt, und diese so hält, dass eine einfache Betätigung des äußeren Schalters möglich ist, mindestens zwei verschiedene Elektroden berührt. Bei Betätigung des Schalters 4 wird mindestens ein Elektro-Hochspannungsimpuls an die Hautkontakte geleitet. Der Impuls soll bewirken, dass der Angreifer die Sirene wieder fallen lässt, da zu erwarten ist, dass diese bereits Spuren des Täters gesichert hat. Der Elektroimpuls kann auch mit einer leichten Verzögerung ausgegeben werden, um eine Aufnahme der Fingerabdrücke oder der Kamera nicht sofort zu stören. Es ist ebenfalls möglich Elektroden und Impulse zu verwenden, die Handschuhe durchdringen können, fall ein Angreifer Handschuhe trägt.

Figur 10A zeigt eine Notrufvorrichtung bzw. Notrufgerät 68, und eine tragbare Sirene 2, bzw. eine Kombination dieser Komponenten. Die Notrufvorrichtung umfasst eine GPS-Positionierungskomponente 56 sowie eine Mobilfunkkommunikationskomponente 58 (mit integrierter Antenne) entsprechend der Ausführung der tragbaren Sirene 2 von Figur 8. Die Notrufvorrichtung 68, und die tragbare Sirene 2 sind über eine gemeinsame mechanische Schnittstelle miteinander verbunden. Hier ist die tragbare Sirene 2 in einem Hohlraum der Notrufvorrichtung 68 untergebracht, und wird durch Halteklammern 82 sowie einer eingerasteten Sperrklinke bzw. Sicherungsvorrichtung 90 in dem Notrufgerät gehalten. Das Notrufgerät 68 ist mit einer Notrufauslösung 70 in Form eines Schalters versehen. Solange die tragbare Sirene innerhalb des Notrufgeräts 68 angeordnet ist, wird die Notrufauslösung 70 bzw. der entsprechende Schalter offengehalten, und kein Notruf wird abgesetzt. Die tragbare Sirene 2 ist mit einem Zuggriff 80 versehen, an der die tragbare Sirene bei gelöster Sicherungsvorrichtung gegen die Kraft der Halteklammern aus der Notrufvorrichtung 68 herausgezogen werden kann.

In Figur 10B ist die Sicherungsvorrichtung 92 ausgelöst und die tragbare Sirene 2 wird am Zuggriff 80 gegen die Federkraft der Haltklammern / Federn aus dem Notrufgerät herausgezogen. Der Abzugsstift 16 verbleibt in dem Notrufgerät 68 und löst damit direkt (oder mit einer leichten Verzögerung) das Tonsignal an der tragbaren Sirene aus. Ohne die tragbare Sirene kann eine Feder der Notrufauslösung 70 deren Kontakte schließen und einen Notruf auslösen. Dabei wird zuerst die aktuelle Position des Notrufgeräts 68 ermittelt, und diese dann über die Mobilfunkkommunikationskomponente 58 an eine Leitstelle von Sicherheitskräften weitergeleitet. Die alarmierten Sicherheitskräfte können dann einen Streifenwagen oder andere Hilfe schicken. Die tragbare Sirene 2 wird weiter ganz aus dem Notrufgerät 68 herausgezogen und einem Angreifer vor die Füße oder hinter den Angreifer geworfen. Bevorzugt vereint die tragbare Sirene einen oder mehrere weiter bevorzugt sogar alle Komponenten wie sie in den Ausführungen der Figuren 1 bis 9 beschrieben wurden. Die Notrufvorrichtung verbleibt im Idealfall bei der angegriffenen Person, um deren Position auch bei einer Entführung oder bei einem Kidnapping-Vorgang weiter verfolgen zu können. Die tragbare Sirene die aufgrund der vorstehenden Eigenschaften inzwischen ein Spurenträger des oder der Angreifer darstellen sollte verbleibt hingegen am Tatort. Der Spurenträger soll dabei bei der Ermittlung und einer Verurteilung des oder der Täter helfen. Die Bauform der Figuren 10A und 10B verhindert, dass der äußere Schalter 4 der tragbaren Sirene 2 versehentlich betätigt wird, da dieser durch einen Teil eines Gehäuses des Notrufgeräts abgedeckt wird.

Eine Kombination eines externen äußeren Schalters mit einem Lautsprecher zur Nutzung mit einem mobilen Endgerät (mPERS) zum Zweck der externen Auslösung einer Notfallsequenz mit der Möglichkeit, ein Tonsignal bevorzugt mit hohem Schalldruck zu emittieren, bei dem an der Sirene ein äußerer Schalter eingebaut wird, mit dem der Ton ein- und abgeschaltet werden kann.

Erfindungsgemäß kann der Ton ein- aber nicht durch den äußeren Schalter ausgeschaltet werden.

Es ist ebenfalls vorgesehen, dass der eingebaute äußere Schalter betätigt werden kann, aber keine Funktion hat und die Auslösung des Tonsignals anders erfolgt.

Bei einer Ausführung findet eine einem äußeren Schalter ähnelnde Bauform des Gehäuses Anwendung.

Bei einer zusätzlichen Ausführung ist ein Rand des äußeren Schalters oder der äußere Schalterattrappe scharfer bzw. scharfkantig oder gezackter ausgeführt, um eine Haut bei Benutzung zu verletzen, die zu einem Körperteil gehört, die den äußeren Schalter oder die äußere Schalterattrappe betätigt.

Bevorzugt ist der äußere Schalter oder die äußere Schalterattrappe so ausgeführt, dass er oder sie beleuchtet wird bei Alarmauslösung.

Bevorzugt ist der äußere Schalter oder die äußere Schalterattrappe zur besseren Sichtbarkeit markiert.

Weiter bevorzugt ist dem zusätzlich oder alleine eine Lampe eingebaut, wobei die Sirene so konfiguriert ist, dass sie bei Alarmauslösung eingeschaltet wird.

Insgesamt kann mit der tragbaren Sirene eine einfache Methode zur Überführung von Angreifern vor allem bei versuchten Gewaltdelikten bei Alarmauslösung eines Notfallsicherungssystem durch Täuschung des Angreifers erreicht werden.

Es gibt am Markt auch externe Zusatzgeräte, bei denen die Auslösung, meist per Bluetooth Verbindung zum mobilen Endgerät in der Weise erfolgt, dass entweder vom externen Gerät ein Sturz entdeckt wird (Fallsensor genannt) und/oder der Nutzer einen äußeren Schalter betätigt, welcher ein bevorzugt codiertes Signal an das mobile Endgerät sendet, welches dann weiter die Notfallsequenz auslöst.

Eine Sirene kann benutzt werden, um einen Angreifer besonders intensiv abzuwehren, in dem er durch den Schalldruck verwirrt wird und eine Ergreifung durch Dritte in Hörreichweite fürchten muss. Die vorliegende Vorrichtung ermöglicht ein Verfahren, bei dem gleichgültig ob der Angriff fortdauert oder der Angreifer ablässt, es erleichtert wird später den Angreifer dingfest zu machen, indem er wie eine Visitenkarte Informationen über sich am Tatort hinterlässt und der Tatort bekannt gegeben ist.

Laut UNHCR Berichten werden auch in Industrieländern von 100 Vergewaltigungen nur 30 zur Anzeige gebracht, drei davon führen zu Gerichtsverhandlungen, wobei nur einer von 100 Vergewaltigern jemals mehr als einen Tag Haftstrafe befürchten muss. Gründe hierfür sind
- die schwierige Beweislage, die der Polizei und den Staatsanwaltschaften die Suche nach dem Attentäter erschweren oder unmöglich machen;
- die Unfähigkeit des Opfers, den Attentäter wegen Dunkelheit oder Maskierung zu beschreiben und später eindeutig zu identifizieren;
- die Aussage gegen Aussage Situation im und vor der Gerichtsverhandlung.

Die hier beschriebene Methode verhindert die Pattsituation und gibt der Polizei klare Indizien, wie ein Attentäter gefunden und/oder überführt werden kann.

Eine Auslöseeinheit kann physisch mit einem Alarmgerät vereint sein, bevorzugt ein Piezo Alarm, welcher z.B. ein Signal mit hohem Schalldruck aussendet oder in der Nähe des Auslösegeräts verbunden mit der Möglichkeit die Auslöseeinheit von der Sirene zu trennen, oder kann die Auslösung von extern an ein Gerät erfolgen, welches der Anwender bevorzugt am Körper trägt, allerdings nicht in der Kombination mit dem externen Zusatzgerät, also dem äußeren Schalter, sondern separiert und unabhängig davon. Unabhängig davon wie die physische und elektronische Ausgestaltung erfolgt, wird das Alarmgerät (die Sirene) um eine Vorrichtung zur Täuschung des Angreifers erweitert. Beschrieben wird ein funktionierender oder nicht funktionierender äußerer Schalter oder gar eine einem äußeren Schalter ähnelnde Bauform, Gehäusestruktur oder Erhebung (oder auch "Einbuchtung") an der Sirene, die den Eindruck erweckt, durch Druck darauf sei der Schall abschaltbar. Diese soll den Angreifer zum Drücken des äußeren Schalters veranlassen, damit dieser Informationen über sich hinterlässt.

Es können mindestens zwei Varianten und mindestens drei Untervarianten ausgeführt werden. In einer ersten Variante kann der Schall ausgelöst werden, indem ein funktionierender äußerer Schalter betätigt wird. Eine erste Untervariante ermöglicht eine Abschaltung des Tonsignals durch den äußeren Schalter. In dieser Variante kann tatsächlich der Schall beendet werden, indem der äußere Schalter in einer bestimmten Weise gedrückt wird, sei es in einer bestimmten Richtung oder in einer bestimmten Tast-Sequenz, also z.B. wie bei einem Morsezeichen.

Erfindungsgemäß ist ein Abschalten nur durch eine andere Methode möglich. Hier kann die Abschaltung nicht durch den äußeren Schalter erfolgen, also z.B. durch einen Schlüssel oder elektronisch durch z.B. durch ein Funksignal oder ein inneres Schaltelement.

Bei einer zweiten Ausführungsform erfolgt die Auslösung extern - sei es durch Abziehen eines Stifts, Entfernen der Sirene aus einer Halterung oder elektronisch, z.B. per Funk, oder ähnlichem - und der äußere Schalter ist "blind" bzw. stellt lediglich eine Schalterattrappe dar. Eine Untervariante umfasst hier einen echten äußeren Schalter ohne Funktion, der einfach nicht angeschlossen ist. Hier wird ein echter äußerer Schalter im Gehäuse der Sirene verbaut, der jedoch keine Funktion hat. Eine weitere Untervariante verfügt lediglich über eine Attrappe eines äußeren Schalters. In dieser Variante wird im Gehäuse der Sirene ein einem äußeren Schalter ähnelndes Bauteil verbaut, welches entweder herausragend oder eingelassen ist. Bevorzugt wird dieses zur besseren Sichtbarkeit farbig oder grau oder mit einem Tonsignal-Symbol oder ähnlicher Symbolik markiert. Bei einer zusätzlichen Untervariante befindet sich eine scharfe Kante am Rand des äußeren Schalters bzw. der Attrappe. In einer weiteren Untervariante wird der Rand des äußeren Schalters, ob echt oder falsch, scharf oder zackig verarbeitet sein und eine Rille besitzen.

Ein Opfer bzw. eine angegriffene Person löst den Alarm aus. Es wirft dem Angreifer die Sirene vor die Füsse. Dieser wird die Flucht suchen oder instinktiv nach der Sirene greifen und nun versuchen, sie abzuschalten. Dies gelingt ihm nicht, sodaß er nach einiger Zeit dieses Vorhaben aufgeben wird. Dies gibt dem Opfer bereits die Zeit, sich zu entfernen. Der Angreifer wird den äußeren Schalter beim Versuch betätigen die Sirene auszuschalten, und nach erfolglosen Versuchen diese schließlich hinwerfen, da er nicht mit der Sirene herumlaufen möchte, da diese gerade Aufmerksamkeit auf sich zieht. Mit dem vergeblichen Versuch, den äußeren Schalter zu betätigen und den Lärm abzuschalten, hinterlässt der Angreifer seinen Fingerabdruck mindestens auf dem echten oder falschen äußeren Schalter, seine DNA, und schließlich im Fall der scharfen oder gezackten Kante vielleicht sogar Hautschuppen und im besten Fall sogar winzige Blutspuren, falls er sich schneidet, am äußeren Schalter und/oder in der Rille.

Das Auffinden der Sirene ist, auch nachdem die Batterie leer ist, einfach, möglich, da sie genau dort liegt, wo der Alarm vom Opfer ausgelöst wurde. Ein gleichzeitig ausgelöstes Notrufgerät hat dabei den Ort der Auslösung aufgezeichnet. Damit kann die Polizei den echten oder genetischen Fingerabdruck des Täters sichern; der Täter muss erklären, wieso der Fingerabdruck auf einem Alarmgerät zu finden ist, welches an der Szene eines erklärten Verbrechens gefunden wurde und in Falle zweier widersprechender Aussagen, wieso trotz eines ausgelösten Sirenenalarms einvernehmlicher Geschlechtsverkehr stattgefunden haben soll.

Bevorzugt ist der echte oder falsche äußere Schalter oder die äußere Schalterattrappe farbig oder grau markiert und/oder mit einem Ton- oder anderem Symbol, um den Angreifer aufzufordern, den äußeren Schalter zu drücken. In einer besonderen Abwandlung kann der äußere Schalter mit Sirenenbeginn leuchten beginnen, um den Angreifer auf den Ort des äußeren Schalters bzw. der äußeren Schalterattrappe hinzuweisen. In einer weiteren Abwandlung kann eine Leuchteinheit verbaut werden, die bevorzugt eine glatte Oberfläche hat und die bevorzugt grell, mit Alarmbeginn leuchtet. Dies soll das Gesicht des Angreifers aufhellen, im Fall des gleißenden Lichts die Situation für Dritte sichtbar machen und dem Angreifer die Aufgabe stellen, sowohl Lärm als auch Licht abzuschalten, also doppelt etwas zu versuchen, was er nicht kann.

### Bezugszeichenliste

- 2: tragbare Sirene
- 4: äußerer Schalter / äußere Schalterattrappe
- 6: Steuerung
- 8: Lautsprecher / Elektroakustikwandler
- 10: Batterie
- 12: Vorspannungsfeder Kontaktschließfeder
- 14: inneres Schaltelement
- 16: Auslöseeinheit / Abzusgstift
- 18: Verletzungsmittel
- 20: Widerhaken
- 22: Finger / Daumen
- 24: Harpune
- 26: Blut
- 28: Rückzugsvorrichtung
- 30: Zeit / Verzögerungselement, kann durch den äußeren Schalter aktiviert werden
- 32: Speicherelement
- 36: Fingerabdruckscanner hier in den äußeren Schalter integriert
- 38: Fingerabdruck
- 40: Spritzdüse
- 42: Kamera- / Tonaufzeichnungs- / Beleuchtungskomponente
- 50: Spritzvorrichtung mit Fluidfüllung
- 52: Beleuchtung des äußeren Schalters
- 56: GPS- Positionierungsvorrichtung
- 58: Mobilfunk-Kommunikationsvorrichtung
- 60: Mobilfunk-Kommunikationsantenne
- 62: Hochspannungsgenerator
- 64: Hautkontakte
- 68: Notrufgerät
- 70: Notrufauslösung
- 80: Zuggriff
- 82: Halteklammern
- 84: Ton-Aus-Symbol / -Markierung
- 90: Sicherungvorrichtung eingerastet
- 92: Sicherungsvorrichtung ausgelöst

## Patentansprüche

1. Tragbare Sirene (2), umfassend:
einen Lautsprecher (8), um ein Tonsignal, mit hohem Schalldruck, abzugeben;
ein inneres Schaltelement (14) zum Ein- und Ausschalten des Tonsignals,
**dadurch gekennzeichnet, dass**
das innere Schaltelement zum Ausschalten nicht ohne ein Werkzeug betätigt werden kann, und
dass die tragbare Sirene weiter einen äußeren Schalter und/oder eine äußere Schalterattrappe (4) umfasst,
wobei ein Ausschalten nicht durch den äußeren Schalter oder die äußere Schalterattrappe (4) erfolgen kann, und
wobei der äußere Schalter bzw. die äußere Schalterattrappe (4) mit einer Vorrichtung versehen ist, um einen Finger- bzw. Daumenabdruck (38) eines Fingers aufzuzeichnen, der den äußeren Schalter bzw die äußere Schalterattrappe (4) betätigen will.

2. Tragbare Sirene (2) gemäß Anspruch 1 oder 2, wobei die äußere Schalterattrappe betätigt werden kann, und bei Betätigung einen Tastenweg und/oder einen Tastenanschlag und/oder einen Tastenton als Rückmeldung der Betätigung aufweist.

3. Tragbare Sirene (2) gemäß einem der vorstehenden Ansprüche, wobei der äußere Schalter und/oder die äußere Schalterattrappe Verletzungsmittel (18) aufweist, um bei Betätigung die Haut eines Benutzers zu verletzen.

4. Tragbare Sirene (2) gemäß Anspruch 3, wobei das Verletzungsmittel (18) mindestens einen scharfen oder gezackten Rand oder scharfe oder gezackte Strukturen aufweist.

5. Tragbare Sirene (2) gemäß Anspruch 3 oder 4, wobei das Verletzungsmittel (18) mindestens eine Nadel, Hohlnadel und/oder mindestens eine Lanzette oder Klinge umfasst, die bevorzugt mit Widerhaken (20) versehen ist.

6. Tragbare Sirene (2) gemäß Anspruch 5, wobei das Verletzungsmittel (18), das mit Widerhaken (20) versehen ist, lösbar ist, sodass ein Teil des Verletzungsmittels (18) bei Betätigung in der Wunde verbleiben kann.

7. Tragbare Sirene (2) gemäß einem der Ansprüche 3 bis 6, wobei das Verletzungsmittel (18) mit einer automatischen Stech- und/oder Rückzugsfunktion (28) versehen ist.

8. Tragbare Sirene (2) gemäß einem der vorstehenden Ansprüche, wobei diese weiter mindestens eine Spritzvorrichtung (50) umfasst, um eine oder mehrere Flüssigkeiten oder Fluide zu verspritzen, wobei die Spritzvorrichtung (50) mit dem äußeren Schalter und/oder der äußeren Schalterattrappe (4) verbunden ist, um bei Betätigung des äußeren Schalters oder der äußeren Schalterattrappe (4) die eine oder die mehreren Flüssigkeiten oder Fluide zu verspritzen.

9. Tragbare Sirene (2) gemäß einem der vorstehenden Ansprüche, wobei der äußere Schalter und/oder die äußere Schalterattrappe beleuchtet sind, und/oder wobei die Sirene eine Einrichtung (52) umfasst, die den äußeren Schalter und/oder die äußere Schalterattrappe (4) bei Auslösung des Tonsignals beleuchtet.

10. Tragbare Sirene (2) gemäß einem der vorstehenden Ansprüche, wobei der äußere Schalter und/oder die äußere Schalterattrappe zur besseren Erkennbarkeit farblich und/oder durch ein Symbol, vorzugsweise ein Ein-/Aus-Schaltsymbol oder ein Ton-Aus-Symbol (84), markiert sind.

11. Tragbare Sirene (2) gemäß einem der vorstehenden Ansprüche, wobei die Sirene weiter eine Lampe oder einen Stroboskop-Blitz umfasst, die bzw. der bei eingeschaltetem Tonsignal oder bei Betätigung des äußeren Schalters bzw. der äußeren Schalterattrappe (4) aktiviert wird.

12. Tragbare Sirene (2) gemäß einem der vorstehenden Ansprüche, wobei die Sirene weiter eine lokale oder globale Positionierungskomponente (56) und/oder eine Kommunikationskomponente umfasst, die bevorzugt bei eingeschaltetem Tonsignal aktiviert werden.

13. Tragbare Sirene (2) gemäß einem der vorstehenden Ansprüche, wobei der äußere Schalter das Tonsignal nicht ausschaltet, sondern nur kurzzeitig, bevorzugt für 0,5 bis 5, weiter bevorzugt 1 bis 4 und noch weiter bevorzugt 1,5 bis 3 Sekunden unterbricht.

14. Tragbare Sirene (2) gemäß einem der vorstehenden Ansprüche, wobei die Sirene weiter eine Tonaufzeichnungsvorrichtung und/oder eine Kamera (42) umfasst, die bei Auslösung des Tonsignals und/oder bei Betätigung des äußeren Schalters und/oder der äußeren Schalterattrappe (4) mindestens eine Ton- und/oder eine Bild- oder Videoaufzeichnung startet.

15. Tragbare Sirene (2) gemäß einem der vorstehenden Ansprüche,
wobei die Sirene über eine trennbare mechanische, elektrische und/oder FunkSchnittstelle mit einem Notrufgerät (68) verbunden werden kann,
wobei die Sirene konfiguriert ist, bei einer Trennung der Schnittstelle zu einem verbundenen Notrufgerät (68) das Tonsignal auszulösen.

## Claims

1. A portable siren (2), comprising:
a speaker (8) so as to output an audio signal with a high sound pressure;
an inner switching element (14) for turning the audio signal on and off,
**characterized in that**
the inner switching element for turning off cannot be activated without a tool, and that the portable siren further comprises an outer switch and / or an outer dummy switch (4), wherein a turning off cannot be carried out by the outer switch or the outer dummy switch (4), and wherein the outer switch or the outer dummy switch (4) is provided with a device for recording a fingerprint or thumbprint (38) of a finger intending to activate the outer switch or the outer dummy switch (4).

2. The portable siren (2) according to claim 1 or 2, wherein the outer dummy switch can be activated and, upon activation, has a key path and / or a key stop and / or a key sound as a response to the activation.

3. The portable siren (2) according to one of the preceding claims, wherein the outer switch and / or the outer dummy switch has injuring means (18), so as to injure the skin of a user upon activation.

4. The portable siren (2) according to claim 3, wherein the injuring means (18) has at least a sharp or jagged edge or sharp or jagged structures.

5. The portable siren (2) according to claim 3 or 4, wherein the injuring means (18) comprises at least one needle, hollow needle and / or at least one lancet or blade, which is preferably provided with barbs (20).

6. The portable siren (2) according to claim 5, wherein the injuring means (18) provided with barbs (20) is detachable, so that part of the injuring means (18) can remain in the wound upon activation.

7. The portable siren (2) according to one of claims 3 to 6, wherein the injuring means (18) is provided with an automatic pricking and / or retraction function (28).

8. The portable siren (2) according to one of the preceding claims, wherein the latter further comprises at least one spraying device (50), so as to spray one or more liquids or fluids, wherein the spraying device (50) is connected to the outer switch and / or the outer dummy switch (4), so as to spray the one or more liquids or fluids upon activation of the outer switch or the outer dummy switch (4).

9. The portable siren (2) according to one of the preceding claims, wherein the outer switch and / or the outer dummy switch are illuminated, and / or wherein the siren comprises an arrangement (52) which illuminates the outer switch and / or the outer dummy switch (4) upon triggering off the audio signal.

10. The portable siren (2) according to one of the preceding claims, wherein the outer switch and / or outer dummy switch is marked in terms of color and / or by a symbol, preferably an on / off switch symbol or a sound-off symbol (84) for better recognizability.

11. The portable siren (2) according to one of the preceding claims, wherein the siren further comprises a lamp or stroboscope flash, which is activated with the audio signal turned on or upon activation of the outer switch or the outer dummy switch (4).

12. The portable siren (2) according to one of the preceding claims, wherein the siren further comprises a local or global positioning component (56) and / or a communication component, which are preferably activated with the audio signal turned on.

13. The portable siren (2) according to one of the preceding claims, wherein the outer switch does not turn off the audio signal, but only interrupts briefly, preferably for 0.5 to 5, more preferable 1 to 4, and even more preferable 1.5 to 3 seconds.

14. The portable siren (2) according to one of the preceding claims, wherein the siren further comprises a sound recording device and / or a camera (42), which starts at least one audio and / or image or video recording upon triggering the audio signal and / or upon activation of the outer switch and / or the outer dummy switch (4).

15. The portable siren (2) according to one of the preceding claims,
wherein the siren can be connected to an emergency call device (68) via a separable mechanical, electrical and / or radio interface,
wherein the siren is configured to trigger the audio signal upon a separation of the interface to a connected emergency call device (68).

## Revendications

1. Sirène portable (2), comprenant :
un haut-parleur (8), pour émettre un signal sonore avec une pression sonore élevée ;
un élément de connexion (14) intérieur pour mettre en marche et arrêter le signal sonore,
**caractérisée en ce que**
l'élément de connexion intérieur ne peut pas être actionné pour arrêt sans un outil, et
**en ce que** la sirène portable comprend en plus un interrupteur extérieur et/ou un faux interrupteur extérieur (4),
sachant qu'un arrêt ne peut pas avoir lieu par l'interrupteur extérieur ou le faux interrupteur extérieur (4), et
sachant que l'interrupteur extérieur ou le faux interrupteur extérieur (4) est doté d'un dispositif pour enregistrer une empreinte digitale ou de pouce (38) d'un doigt, qui veut actionner l'interrupteur extérieur ou le faux interrupteur extérieur (4).

2. Sirène portable (2) selon la revendication 1 ou 2, sachant que le faux interrupteur extérieur peut être actionné et comporte en cas d'actionnement une course de touche et/ou une butée de touche et/ou un ton de touche en tant que confirmation de réaction de l'actionnement.

3. Sirène portable (2) selon l'une quelconque des revendications précédentes, sachant que l'interrupteur et/ou le faux interrupteur extérieur comporte un moyen de blessure (18) pour blesser la peau d'un utilisateur en cas d'actionnement.

4. Sirène portable (2) selon la revendication 3, sachant que le moyen de blessure (18) comporte au minimum un bord tranchant ou dentelé ou des structures tranchantes ou dentelées.

5. Sirène portable (2) selon la revendication 3 ou 4, sachant que le moyen de blessure (18) comprend au minimum une aiguille, une aiguille creuse et/ou au moins une lancette ou lame, qui est dotée de préférence d'un crochet (20).

6. Sirène portable (2) selon la revendication 5, sachant que le moyen de blessure (18), qui est doté du crochet (20), est mobile de telle manière qu'une partie du moyen de blessure (18) peut rester dans la blessure en cas d'actionnement.

7. Sirène portable (2) selon l'une quelconque des revendications 3 à 6, sachant que le moyen de blessure (18) est doté d'une fonction de piquage et/ou de retrait (28) automatique.

8. Sirène portable (2) selon l'une quelconque des revendications précédentes, sachant que celle-ci comprend en plus au moins un dispositif d'injection (50) pour injecter un ou plusieurs liquides ou fluides, sachant que le dispositif d'injection (50) est relié à l'interrupteur et/ou au faux interrupteur extérieur (4), pour injecter en cas d'actionnement de l'interrupteur extérieur ou du faux interrupteur extérieur (4) un ou plusieurs liquides ou fluides.

9. Sirène portable (2) selon l'une quelconque des revendications précédentes, sachant que l'interrupteur extérieur et/ou le faux interrupteur extérieur sont éclairés et/ou sachant que la sirène comprend un système (52), qui éclaire l'interrupteur extérieur et/ou le faux interrupteur extérieur (4) en cas de déclenchement du signal sonore.

10. Sirène portable (2) selon l'une quelconque des revendications précédentes, sachant que l'interrupteur extérieur et/ou le faux interrupteur extérieur sont marqués en couleur et/ou par un symbole, de préférence un symbole Marche/Arrêt ou un symbole Arrêt Tonalité (84), pour une meilleure identification.

11. Sirène portable (2) selon l'une quelconque des revendications précédentes, sachant que la sirène comprend en plus une lampe ou un flash stroboscopique, qui est activé lorsque le signal sonore est en fonctionnement ou en cas d'actionnement de l'interrupteur extérieur ou du faux interrupteur extérieur (4).

12. Sirène portable (2) selon l'une quelconque des revendications précédentes, sachant que la sirène comprend en plus un composant de positionnement (56) et/ou un composant de communication local ou général, qui sont activés de préférence lorsque le signal sonore est en fonctionnement.

13. Sirène portable (2) selon l'une quelconque des revendications précédentes, sachant que l'interrupteur extérieur n'arrête pas le signal sonore, mais ne l'interrompt que brièvement, de préférence de 0,5 à 5 secondes, de préférence encore de 1 à 4 secondes et encore plus de préférence de 1,5 à 3 secondes.

14. Sirène portable (2) selon l'une quelconque des revendications précédentes, sachant que la sirène comprend en plus un dispositif d'enregistrement sonore et/ou une caméra (42), qui met en marche en cas de déclenchement du signal sonore et/ou en cas d'actionnement de l'interrupteur extérieur et/ou du faux interrupteur extérieur (4) au moins un enregistrement sonore et/ou d'image ou vidéo.

15. Sirène portable (2) selon l'une quelconque des revendications précédentes,
sachant que la sirène peut être reliée à un appareil d'appel d'urgence (68) par une interface mécanique, électrique et/ou radio séparable,
sachant que la sirène est configurée pour déclencher le signal sonore lors d'une séparation de l'interface avec un appareil d'appel d'urgence (68) relié.
